# EUROPEAN PATENT SPECIFICATION

(11) **EP 3 560 317 B1**
(45) Date of publication and mention of the grant of the patent: **02.08.2023**
(21) Application number: 17884514.5
(22) Date of filing: 20.12.2017
(51) Int. Cl.: A01D 67/00, A01D 34/64, A01D 34/00

(54) **WORK MACHINE**
ARBEITSMASCHINE
MACHINE DE TRAVAIL

(30) Priority: 22.12.2016 JP 2016249031; 22.12.2016 JP 2016249032; 22.12.2016 JP 2016249033
(43) Date of publication of application: 30.10.2019
(73) Proprietor: Kubota Corporation, Osaka-shi, Osaka 556-8601 (JP); Saito Noki Seisakusho Co., Ltd., Sakata-shi, Yamagata 998-0832 (JP)
(72) Inventor: NAKAMURA Taro, Sakai-shi Osaka 590-0823 (JP); DEI Yoshihito, Sakai-shi Osaka 590-0823 (JP); KOBAYASHI Takanori, Amagasaki-shi Hyogo 661-0967 (JP); MINAKATA Yusuke, Amagasaki-shi Hyogo 661-0967 (JP); KAWABATA Masahiro, Amagasaki-shi Hyogo 661-0967 (JP); KOTO Hiroshi, Amagasaki-shi Hyogo 661-0967 (JP); SAITO Hiroki, Sakata-shi Yamagata 998-0832 (JP)
(74) Representative: Cabinet Beau de Loménie
(86) International application number: PCT/JP2017/045821
(87) International publication number: WO 2018/117190

(56) References cited:
- WO-A1-2013/183027
- WO-A1-2015/053488
- DE-A1-102010 031 789
- JP-A- 2000 316 348
- JP-A- 2001 204 219
- JP-A- 2005 137 271
- JP-A- 2014 233 255
- JP-A- 2016 067 229
- JP-A- 2016 178 869
- JP-A- 2016 178 869
- JP-A- 2016 185 132
- US-A1- 2005 060 975

## Description

### TECHNICAL FIELD

The present invention relates to a work vehicle, for instance an unmanned work vehicle (e.g. an autonomous travel type work vehicle, a remote control type work vehicle, or a walk-behind type work vehicle).

### BACKGROUND ART

### Background Art 1

Examples of unmanned work vehicles include autonomous travel type and remote control type lawn mowers, as disclosed in Patent Literature 1, and a walk-behind type lawn mower with an elongated steering rod extending from the vehicle body thereof, as disclosed in Patent Literature 2.

Such lawn mowers are mainly used to perform mowing work on an inclined surface, such as on a highway, a river bank, or a slope of a farm field.

Lawn mowers according to Patent Literatures 1 and 2 each include right and left first wheels on one side of the vehicle body in the front-rear direction thereof, right and left second wheels on the other side of the vehicle body in the front-rear direction thereof and a work apparatus, and further include an engine that transmits power to the first wheels, the second wheels and the work apparatus.

Other examples of work vehicles, comprising various improvements to allow operation on difficult surfaces, for instance on inclined surfaces, or having improved stability, are further disclosed by documents JP 2016 178869, DE 10 2010 031789 and JP 2016 185132.

### Background Art 2

Examples of unmanned work vehicles include a remote control type lawn mower that is wirelessly operated, as disclosed in Patent Literature 3.

The lawn mower according to Patent Literature 3 is provided with a cutting blade housing (corresponding to a work housing) that houses a cutting blade (corresponding to a work apparatus), and a frame that is rectangular in plan view is coupled to the cutting blade housing.

An engine and a power transmission case is supported by the cutting blade housing and the frame, and power from the engine is transmitted to travel wheels and the cutting blade via the power transmission case.

### Background Art 3

The lawn mower according to Patent Literature 3 is provided with the cutting blade housing (corresponding to the work housing) that houses the cutting blade (corresponding to the work apparatus), the engine and the power transmission case are supported by the cutting blade housing, and power from the engine is transmitted to travel wheels and the cutting blade via the power transmission case.

### PRIOR ART DOCUMENTS

### Patent Literatures

Patent Literature 1: JP 2015-167539 A
Patent Literature 2: JP 2013-001251 A
Patent Literature 3: JP 2015-168395 A

### SUMMARY OF THE INVENTION

### Problems to be Solved by the Invention

### Problem 1

A problem corresponding to "Background Art 1" is as follows.

When a lawn mower performs mowing work on an inclined surface, the lawn mower may repeatedly perform work such that first the lawn mower performs mowing work while travelling along a contour line of the inclined surface from one end to the other end of the inclined surface, and upon the vehicle body reaching the other end of the inclined surface, the vehicle body is moved slightly downward or upward along the inclined surface, and thereafter the lawn mower performs mowing work while travelling along a contour line of the inclined surface from the other end to the one end of the inclined surface.

As described above, when a lawn mower travels along a contour line of an inclined surface, the lawn mower travels in an inclined state, in which the hill side (the upper side relative to the inclined surface) of the lawn mower is located at a high position and the valley side (the lower side relative to the inclined surface) of the lawn mower is located at a low position and there is the risk of the vehicle body falling toward the valley side (the lower side of the inclined surface).

Thus, there is demand for a work machine that is less likely to fall toward the valley side (the lower side of the inclined surface) when performing work while travelling along a contour line of the inclined surface.

### Problem 2

A problem corresponding to "Background Art 2" is as follows.

According to Patent Literature 3, a frame that is rectangular in plan view is coupled to a cutting blade housing so as to be in contact with the upper surface of the cutting blade housing. Therefore, the overall width of the cutting blade housing and the frame in the up-down direction (vertical direction) is relatively small. Therefore, there is room for improvement in overall rigidity of the work vehicle.

Thus, there is demand for improving overall rigidity of a work vehicle such as an unmanned autonomous travel type work vehicle or remote control type work vehicle, or a walk-behind type work vehicle.

### Problem 3

A problem corresponding to "Background Art 3" is as follows.

A lawn mower as disclosed in Patent Literature 3 is mainly used to perform mowing work on an inclined surface, such as on a highway, a river bank, or a slope of a farm field, and if the lawn mower travels on a steeply inclined surface or an uneven inclined surface, there is the risk of the lawn mower falling.

Therefore, there is demand for a work vehicle that is provided with a structure for addressing the risk of falling.

### SOLUTION TO PROBLEM

### Solution 1

A solution corresponding to "Problem 1" is the work vehicle defined by claim 1.

This work vehicle comprises:
right and left first wheels that are provided on one side of a vehicle body in a front-rear direction thereof;
right and left second wheels that are provided on the other side of the vehicle body in the front-rear direction thereof;
a work apparatus that is provided for the vehicle body; and
an engine that transmits power to the right and left first wheels, the right and left second wheels and the work apparatus,
wherein, in plan view of the vehicle body, the engine is supported by the vehicle body between the right first wheel and the right second wheel or between the left first wheel and the left second wheel.

According to this configuration, when travelling along a contour line of an inclined surface, the work vehicle may travel such that the first wheel and the second wheel on the engine side are located on the hill side (the upper side relative to the inclined surface) and the first wheel and the second wheel on the side opposite to the engine are located on the valley side (the lower side relative to the inclined surface).

Since the engine is heavy, if the engine is located between the right first wheel and the right second wheel or between the left first wheel and the left second wheel in plan view, the center of gravity of the vehicle body is located on the engine side relative to the center of the vehicle body in the right-left direction.

As a result, when travelling along a contour line of an inclined surface, the work vehicle travels such that the first wheel and the second wheel on the engine side are located on the hill side (the upper side of the inclined surface), and accordingly the work vehicle travels in a state where the center of gravity of the vehicle body is located on the hill side (the upper side of the inclined surface) relative to the center of the vehicle body in the right-left direction thereof. Thus, it is possible to prevent the vehicle body from falling toward the valley side (the lower side of the inclined surface).

In one preferable embodiment, the engine is supported by the vehicle body such that the engine overlaps the first wheel and the second wheel on the engine side in a view from the front-rear direction of the vehicle body.

According to this configuration, the engine is located at a low position of the vehicle body. Therefore, when the work vehicle travels along a contour line of an inclined surface, the center of gravity of the vehicle body can be located on the hill side relative to the center of the vehicle body in the right-left direction thereof (on the upper side of the inclined surface), and at a low position. Therefore, it is possible to prevent the vehicle body from falling toward the valley side (the lower side of the inclined surface).

In one preferable embodiment, a balance weight is supported at a position that is outward of the engine in the right-left direction of the vehicle body.

According to this configuration, the center of gravity of the vehicle body can be located further away from the center of the vehicle body in the right-left direction thereof, toward the engine. Therefore, it is possible to prevent the vehicle body from falling toward the valley side (the lower side of the inclined surface).

In addition, in the work vehicle as defined by claim 1, in the right-left direction of the vehicle body, the width of the first wheel on the opposite side to the engine is set to be greater than the width of the first wheel on the engine side; and in the right-left direction of the vehicle body, the width of the second wheel on the opposite side to the engine is set to be greater than the width of the second wheel on the engine side.

In a state where the work vehicle travels along a contour line of an inclined surface, if the vehicle body falls toward the valley side (the lower side of the inclined surface), the vehicle body pivots about outer ends of the first wheel and the second wheel on the valley side (the lower side of the inclined surface), and thus the vehicle body falls toward the valley side (the lower side of the inclined surface).

According to this configuration, when the work vehicle travels along a contour line of an inclined surface, if the work vehicle travels in a state where the first wheel and the second wheel on the engine side is located on the hill side (the upper side of the inclined surface), the first wheel and the second wheel on the valley side (the lower side of the inclined surface) have a greater width. That is, the outer ends of the first wheel and the second wheel on the valley side (the lower side of the inclined surface) can be separated away from the vehicle body in the right-left direction of the vehicle body. Therefore, it is possible to prevent the vehicle body from falling toward the valley side (the lower side of the inclined surface).

When the work vehicle travels along a contour line of an inclined surface, the vehicle body may slide sideways along the slope of the inclined surface toward the valley side (the lower side of the inclined surface).

When the work vehicle travels along a contour line of an inclined surface, due to the inclination of the inclined surface, ground contact pressure applied to the first wheel and the second wheel on the valley side (the lower side of the inclined surface) is likely to be higher than that applied to the first wheel and the second wheel on the hill side (the upper side of the inclined surface). Therefore, in the present configuration, considering the above-described sideslip of the vehicle body toward the valley side (the lower side of the inclined surface), the width of the first wheel and the second wheel on the side opposite to the engine is set to be greater than the width of the first wheel and the second wheel on the engine side.

As a result, when the work vehicle travels along a contour line of an inclined surface, if the work vehicle travels in a state where the first wheel and the second wheel on the engine side are located on the hill side (the upper side of the inclined surface), the first wheel and the second wheel on the valley side (the lower side of the inclined surface) have a greater width and higher ground contact pressure is applied thereto. Thus, the first wheel and the second wheel on the valley side (the lower side of the inclined surface) receive sideslip of the vehicle body toward the valley side (the lower side of the inclined surface). Therefore, it is possible to prevent the vehicle body from sliding sideways toward the valley side (the lower side of the inclined surface).

In one preferable embodiment, a center-side portion, in the right-left direction of the vehicle body, of a grounded portion of each of the first wheel and the second wheel on the engine side is provided with a flat plate-shaped rib that protrudes outward in radial directions of the wheel, so as to extend in a rotation direction of the wheel, and a lateral outer side portion, relative to the vehicle body, of a grounded portion of each of the first wheel and the second wheel on the opposite side to the engine is provided with a flat plate-shaped rib that protrudes outward in radial directions of the wheel, so as to extend in a rotation direction of the wheel.

When the work vehicle travels along a contour line of an inclined surface, if the work vehicle travels in a state where the first wheel and the second wheel on the engine side are located on the hill side (the upper side of the inclined surface), the width of the first wheel and the second wheel on the valley side (the lower side of the inclined surface) is greater and contact pressure applied thereto is higher. In such a state, in the first wheel and the second wheel on the engine side, higher ground contact pressure is applied to center-side portions, in the right-left direction of the vehicle body, of the grounded portions of the first wheel and the second wheel.

Similarly, in the first wheel and the second wheel on the opposite side to the engine, higher ground contact pressure is applied to portions of the grounded portions on the side opposite to the central side in the right-left direction of the vehicle body, of the first wheel and the second wheel.

With this configuration, in the first wheel and the second wheel on the engine side, and the first wheel and the second wheel on the opposite side to the engine, portions of the grounded portions where high ground pressure is to be applied are provided with flat plate-shaped ribs that protrude outward in radial directions and extend in rotation directions of the first wheel and the second wheel. Thus, the ribs of the first wheel and the second wheel are more likely to be hooked to the inclined surface (dig into the inclined surface).

Therefore, due to the state in which the ribs of the first wheel and the second wheel being hooked to the inclined surface (digging into the inclined surface), it is possible to prevent the vehicle body from sliding sideways toward the valley side (the lower side of the inclined surface).

In one preferable embodiment, the work vehicle further includes: an operation tool that is to be manually operated and is located on the engine side in the right-left direction of the vehicle body.

With this configuration, when the work vehicle travels along a contour line of an inclined surface, the work vehicle travels in a state where the first wheel and the second wheel on the engine side are located on the hill side (the upper side of the inclined surface) and the vehicle body is prevented from falling toward the valley side (the lower side of the inclined surface). In such a state, the operator can effortlessly operate an operation tool such as an operation lever that is used to activate or stop a work apparatus, for example, from the hill side (the engine side).

### Solution 2

A solution corresponding to "Problem 2", which is not claimed in the appended set of claims, is as follows:
A work vehicle comprising:
a work apparatus;
a work housing that houses the work apparatus;
right and left first wheels that are provided on one side of the work housing in a front-rear direction thereof;
right and left second wheels that are provided on the other side of the work housing in the front-rear direction thereof;
a first frame member that is coupled to one end portion of the work housing in the front-rear direction thereof, and includes right and left vertical frames and an upper horizontal frame that is coupled to an upper portion of the right vertical frame and an upper portion of the left vertical frame so as to span therebetween;
a second frame member that is coupled to the other end portion of the work housing in the front-rear direction thereof, and includes right and left vertical frames and an upper horizontal frame that is coupled to an upper portion of the right vertical frame and an upper portion of the left vertical frame so as to span therebetween;
a right front-rear frame that is coupled to a right portion of an upper portion of the first frame member and a right portion of an upper portion of the second frame member so as to span therebetween;
a left front-rear frame that is coupled to a left portion of an upper portion of the first frame member and a left portion of an upper portion of the second frame member so as to span therebetween; and
a power transmission case and an engine that transmit power to the right and left first wheels, the right and left second wheels and the work apparatus, and that are supported by the work housing.

With this configuration, the first frame member and the second frame member that are coupled to one end portion and the other end portion of the work housing include the right and left vertical frames and an upper horizontal frame that is coupled to an upper portion of the right vertical frame and an upper portion of the left vertical frame so as to span therebetween. Therefore, the first frame member and the second frame member are located at relatively high positions, and have high rigidity.

As a result, the right front-rear frame and the left front-rear frame are located at positions that are away from the work housing in the upward direction, and are away from each other in the right-left direction. The right front-rear frame and the left front-rear frame are coupled to the one end portion and the other end portion of the work housing via the first frame member and the second frame member.

As described above, the overall height of the work housing, the right front-rear frame, and the left front-rear frame in the up-down direction is relatively large due to the first frame member and the second frame member that are high and rigid, and the right front-rear frame and the left front-rear frame are located away from each other in the right-left direction. Due to these features, it is possible to improve overall flexural rigidity and torsional rigidity of the work vehicle.

With this configuration, it is possible to secure a relatively large space that is surrounded by the first frame member, the second frame member, the right front-rear frame and the left front-rear frame, above the work housing. Therefore, when the power transmission case and the engine are to be supported by the work housing, it is possible to realize a state in which the power transmission case and the engine are surrounded by the first frame member, the second frame member, the right front-rear frame and the left front-rear frame.

As a result, when the work vehicle travels in an orchard where crops are relatively densely planted or in bushes, the first frame member, the second frame member, the right front-rear frame, and the left front-rear frame prevent branches from catching on the power transmission case or the engine, and thus prevent a failure from occurring in the power transmission case or the engine due to branches or the like catching thereon.

In one preferable embodiment, the work vehicle further includes a lateral frame that is coupled to the right front-rear frame and the left front-rear frame so as to span therebetween.

With this configuration, the lateral frame is coupled to the right front-rear frame and the left front-rear frame so as to span therebetween. Therefore, it is possible to improve the rigidity of the right front-rear frame and the left front-rear frame, and accordingly it is possible to improve overall flexural rigidity and torsional rigidity of the work vehicle.

In one preferable embodiment, the first frame member includes a lower horizontal frame that is coupled to a lower portion of the right vertical frame and a lower portion of the left vertical frame that are included in the first frame member, so as to span therebetween,
the second frame member includes a lower horizontal frame that is coupled to a lower portion of the right vertical frame and a lower portion of the left vertical frame that are included in the second frame member, so as to span therebetween,
the lower horizontal frame of the first frame member is coupled to the one end portion of the work housing in the front-rear direction thereof, and
the lower horizontal frame of the second frame member is coupled to the other end portion of the work housing in the front-rear direction thereof.

With this configuration, the first frame member and the second frame member include, in addition to the right and left vertical frames and the upper horizontal frames, lower horizontal frames that are coupled to lower portions of the right vertical frames and lower portions of the left vertical frames. Therefore, it is possible to improve the rigidity of the first frame member and the second frame member. As a result, it is possible to improve overall flexural rigidity and torsional rigidity of the work vehicle.

Also, the lower horizontal frames of the first frame member and the second frame member extend along the one end portion and the other end portion of the work housing. Therefore, the lower horizontal frames of the first frame member and the second frame member and the one end portion and the other end portion of the work housing can be coupled to each other along a relatively long range in the right-left direction.

As a result, it is possible to firmly couple the lower horizontal frames of the first frame member and the second frame member and the one end portion and the other end portion of the work housing to each other, and it is possible to improve overall flexural rigidity and torsional rigidity of the work vehicle.

In one preferable embodiment, the right and left first wheels are supported at lower portions of the right and left vertical frames of the first frame member, and the right and left second wheels are supported at lower portions of the right and left vertical frames of the second frame member.

With this configuration, the right and left first wheels and the right and left second wheels are supported by the right and left vertical frames of the first frame member and the second frame member that have sufficient rigidity. Therefore, it is possible to stabilize travel of the work vehicle.

### Solution 3

A solution corresponding to "Problem 3", which is not claimed in the appended set of claims, is as follows:
A work vehicle comprising:
a work apparatus;
a work housing that houses the work apparatus;
right and left first wheels that are provided on one side of the work housing in a front-rear direction thereof;
right and left second wheels that are provided on the other side of the work housing in the front-rear direction thereof;
a first frame member that is coupled to one end portion of the work housing in the front-rear direction thereof;
a second frame member that is coupled to the other end portion of the work housing in the front-rear direction thereof;
a front-rear frame that is coupled to an upper portion of the first frame member and an upper portion of the second frame member so as to span therebetween;
a lateral frame that is coupled to the front-rear frame so as to extend in the right-left direction of the work housing; and
a power transmission case and an engine that transmits power to the first wheels, the second wheels and the work apparatus,
wherein the power transmission case and the engine are surrounded by the work housing, the front-rear frame, and the lateral frame in side view, and are located between the first frame member and the second frame member and between a right end portion and a left end portion of the lateral frame in plan view.

With this configuration, it is possible to secure a space that is surrounded by the work housing, the front-rear frame and the lateral frame in the up-down direction, and that is surrounded by the first frame member and the second frame member in the front-rear direction, and the power transmission case and the engine are housed in this space.

As a result, the power transmission case and the engine are protected by the first frame member, the second frame member, the front-rear frame and the lateral frame when the work vehicle falls. Thus, it is possible to improve the durability of the work vehicle.

In one preferable embodiment, the work vehicle further includes a travel power transmission case that transmits power from the power transmission case to the first wheels and the second wheels, and is provided to the right or the left of the power transmission case so as to extend along the front-rear direction of the work housing, and the travel power transmission case is surrounded by the work housing, the front-rear frame and the lateral frame in side view, and is located on a central side relative to the right end portion or the left end portion of the lateral frame, in the right-left direction of the work housing, in plan view.

If the right and left first wheels and right and left second wheels are respectively provided on one side of the work housing in the front-rear direction and the other side of the work housing in the front-rear direction, a travel power transmission case for transmitting power from the power transmission case to the first wheels and the second wheels may be provided.

With this configuration, if the travel power transmission case is provided to the right or the left of the power transmission case so as to extend in the front-rear direction of the work housing, the travel power transmission case may be protected by the front-rear frame and the lateral frame when the work vehicle falls. Thus, it is possible to improve the durability of the work vehicle.

In one preferable embodiment, an accelerator actuator that operates an accelerator of the engine is surrounded by the work housing, the front-rear frame and the lateral frame in side view, and is located between the first frame member and the second frame member and between a right end portion and a left end portion of the lateral frame in plan view.

An autonomous travel type or remote control type work vehicle may be provided with an accelerator actuator that operates the accelerator of the engine.

With this configuration, in a case where an accelerator actuator is provided, the accelerator actuator is protected by the first frame member, the second frame member, the front-rear frame and the lateral frame when the work vehicle falls. Thus, it is possible to improve the durability of the work vehicle.

In one preferable embodiment, a forward/rearward switchover device that switches power that is to be transmitted to the first wheels and the second wheels, to a forward travel state and a rearward travel state, is provided in the power transmission case, and a forward/rearward travel actuator that operates the forward/rearward switchover device is surrounded by the work housing, the front-rear frame and the lateral frame in side view, and is located between the first frame member and the second frame member and between a right end portion and a left end portion of the lateral frame in plan view.

An autonomous travel type or remote control type work vehicle may be provided with a forward/rearward travel actuator that operates a forward/rearward switchover device that is provided in the power transmission case.

With this configuration, in a case where a forward/rearward travel actuator is provided, the forward/rearward travel actuator is protected by the first frame member, the second frame member, the front-rear frame and the lateral frame when the work vehicle falls. Thus, it is possible to improve the durability of the work vehicle.

In one preferable embodiment, the first wheels are supported so as to be steerable, the second wheels are supported so as to be steerable, and a first steering actuator that steers the first wheels and a second steering actuator that steers the second wheels are surrounded by the work housing, the front-rear frame and the lateral frame in side view, and are located between the first frame member and the second frame member and between a right end portion and a left end portion of the lateral frame in plan view.

An autonomous travel type or remote control type work vehicle may be provided with a first steering actuator that steers the first wheels and a second steering actuator that steers the second wheels.

With this configuration, in a case where the first steering actuator and the second steering actuator are provided, the first steering actuator and the second steering actuator are protected by the first frame member, the second frame member, the front-rear frame and the lateral frame when the work vehicle falls. Thus, it is possible to improve the durability of the work vehicle.

In one preferable embodiment, a transmission device that can perform speed change on power that is transmitted to the first wheels and the second wheels is provided in the power transmission case, and a transmission operation tool that is to be manually operated to operate the transmission device is supported by the front-rear frame.

In a work vehicle, steering of the first wheels and the second wheels and switching to forward travel and rearward travel are performed with a relatively high frequently. However, the work vehicle often travels at a constant speed while performing work, and a transmission operation for travel is not frequently performed. Therefore, in this configuration, the transmission device provided in the power transmission case is not remotely operated, and instead a transmission operation tool that is used to operate the transmission device and is to be manually operated is provided in the work vehicle.

With this configuration, the transmission operation tool is supported by the front-rear frame, and is located at a relatively high position. Therefore, operability is excellent when the operator approaches the work vehicle and operates the transmission operation tool. The front-rear frame also serves as a member that supports the transmission operation tool, and therefore, this configuration is advantageous in terms of simplification of the structure.

In one preferable embodiment, a work clutch that can switch power that is to be transmitted to the work apparatus to a power transmission state and a blocked state is provided in the power transmission case, and a manual operation type clutch operation tool that operates the work clutch is supported by the front-rear frame.

In a work vehicle, steering of the first wheels and the second wheels and switching to forward travel and rearward travel are performed with a relatively high frequency. However, the work apparatus is often operated continuously, and an operation for starting or stopping the work apparatus is not frequently performed. Considering this fact, in this configuration, the work clutch provided in the power transmission case is not remotely operated, and instead a clutch operation tool that is used to operate the work clutch and that is manually operated is provided in the work vehicle.

With this configuration, the clutch operation tool is supported by the front-rear frame, and is located at a relatively high position. Therefore, operability is excellent when the operator approaches the work vehicle and operates the clutch operation tool. The front-rear frame also serves as a member that supports the clutch operation tool, and therefore, this configuration is advantageous in terms of simplification of the structure.

In one preferable embodiment, a manual operation type height operation tool that changes the height of the work apparatus upward and downward relative to the ground is supported by the work housing.

In the work vehicle, steering of the first wheels and the second wheels and switching to forward travel and rearward travel are performed with a relatively high frequency. However, the work apparatus is often operated while being kept at a constant height relative to the ground, and an operation for changing the height of the work apparatus relative to the ground is not frequently performed. Considering this fact, in the present invention, the height of the work apparatus relative to the ground is not remotely operated, and instead a manually operated height operation tool is provided in the work vehicle and is used to change the height of the work apparatus upward and downward relative to the ground.

With this configuration, the height operation tool is supported by the work housing, and the height operation tool is located in a space that is surrounded by the work housing, the front-rear frame, the lateral frame, the first frame member and the second frame member. Therefore, the height operation tool is protected when the work vehicle falls.

### BRIEF DESCRIPTION OF THE DRAWINGS

Fig. 1 is a right side view of a lawn mower.
Fig. 2 is a plan view of the lawn mower.
Fig. 3 is a front view of the lawn mower.
Fig. 4 is a plan view showing a second frame member and the vicinity thereof.
Fig. 5 is a plan view of the lawn mower showing with removing a first frame member, the second frame member, a right front-rear frame, a left front-rear frame, etc.
Fig. 6 is a front view in a vertical section showing a power transmission case and the vicinity thereof.
Fig. 7 is a front view in vertical section showing a right first wheel and the vicinity thereof.
Fig. 8 is a front view in vertical section showing a left first wheel and the vicinity thereof.
Fig. 9 is a right side view in vertical section showing the first frame member and the vicinity thereof.
Fig. 10 is a rear view showing a first steering motor and the vicinity thereof.
Fig. 11 is a side view of a lever guide.
Fig. 12 is an exploded perspective view of the lawn mower, showing the cutting blade housing, the first frame member, the second frame member, the right front-rear frame, the left front-rear frame, etc.
Fig. 13 is a schematic diagram showing a power transmission system for transiting power from an engine to a cutting blade, the first wheels and the second wheels.
Fig. 14 is a schematic diagram showing a linkage/interlock state between a control device and various elements/units.

### EMBODIMENTS OF THE INVENTION

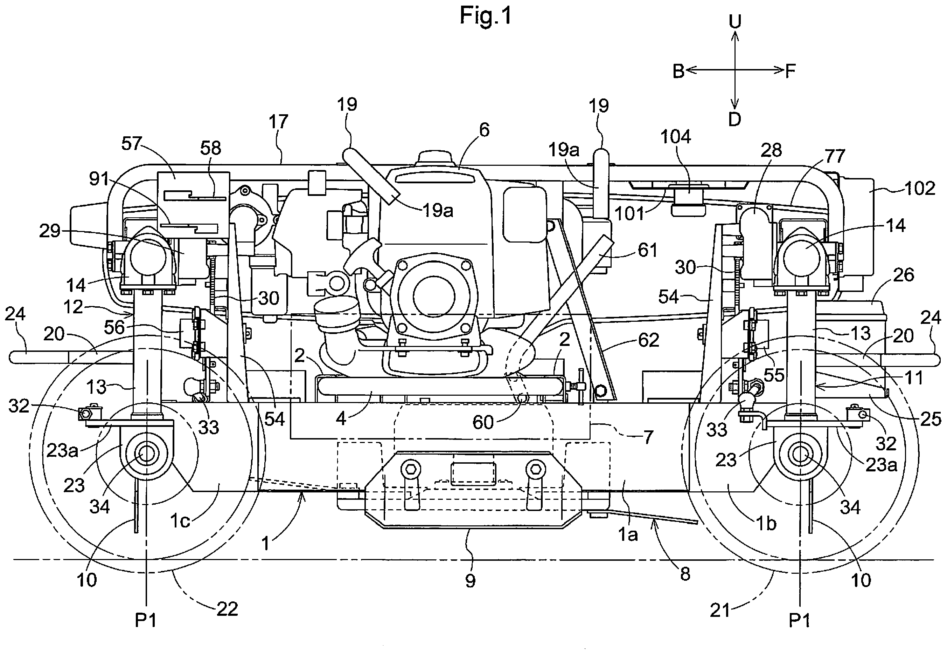

Figs. 1 to 14 show a remote control type lawn mower that is wirelessly operated, which is one example of a work vehicle. In Figs. 1 to 14, "F" indicates a forward direction of the lawn mower and "B" indicates a rearward direction of the lawn mower. "U" indicates an upward direction of the lawn mower and "D" indicates a downward direction of the lawn mower. "R" indicates a direction to the right of the lawn mower and "L" indicates a direction to the left of the lawn mower.

As shown in Figs. 1, 2, 3 and 12, the lawn mower is provided with a cutting blade housing 1 that houses a cutting blade 8, and a power transmission case 5 and an engine 6 are supported by the cutting blade housing 1, and the lawn mower is provided with right and left first wheels 21 and right and left second wheels 22 for travelling.

As shown in Figs. 1, 2, 3 and 12, a first frame member 11 and a second frame member 12 are coupled to one end portion 1b and the other end portion 1c of the cutting blade housing 1 so as to extend upward therefrom. A right front-rear frame 17 and a left front-rear frame 18 are coupled to upper portions of the first frame member 11 and the second frame member 12 so as to span therebetween, and lateral frames (right-left extending frames) 19 are coupled to the right front-rear frame 17 and the left front-rear frame 18 so as to span therebetween.

The following describes structures related to the cutting blade housing 1, the first frame member 11, the second frame member 12, the right front-rear frame 17, the left front-rear frame 18, the lateral frames 19, the power transmission case 5, the engine 6, the first wheels 21 and the second wheels 22.

### Structures related to Cutting Blade Housing, Power Transmission Case and Engine

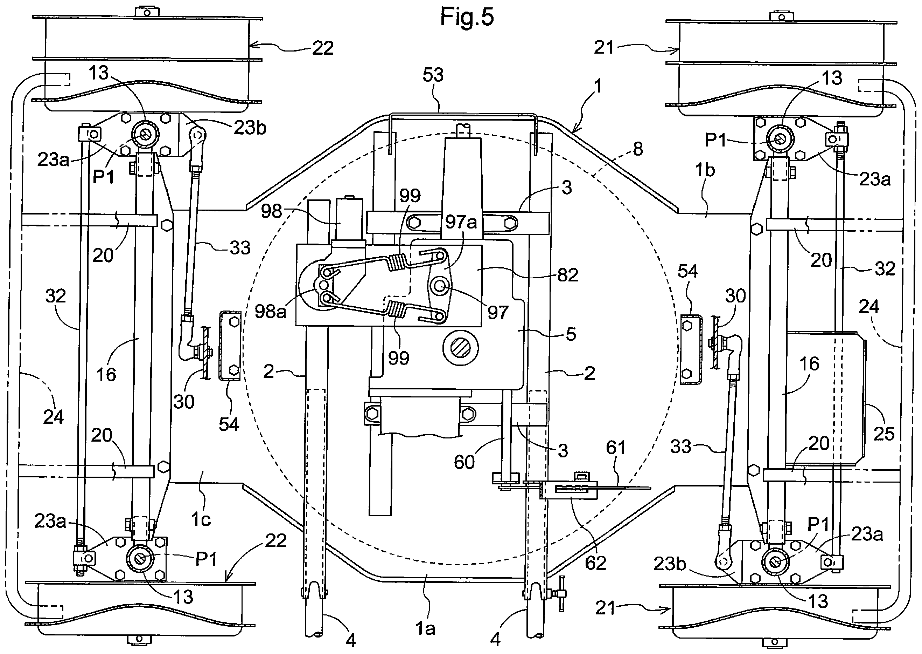

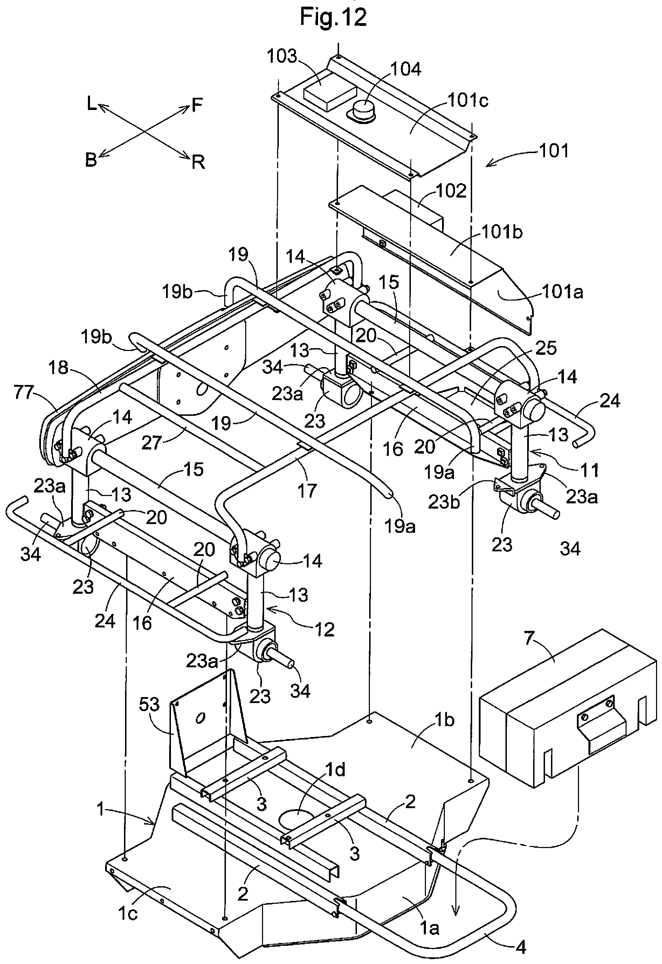

As shown in Figs. 5 and 12, the cutting blade housing 1 (corresponding to a vehicle body and a work housing) is provided with a central portion 1a that has an octagonal shape in plan view, the one end portion 1b that is connected to one end (the front end) of the central portion 1a in the front-rear direction of the cutting blade housing 1, and the other end portion 1c that is connected to the other end (the rear end) of the central portion 1a in the front-rear direction of the cutting blade housing 1.

As shown in Figs. 5 and 12, an opening 1d is provided in the central portion 1a of the cutting blade housing 1. In the central portion 1a of the cutting blade housing 1, frames 2 that are channel-shaped are coupled to the front side and the rear side of the cutting blade housing 1 relative to the opening 1d, so as to extend in the right-left direction of the cutting blade housing 1. Frames 3 that are channel-shaped are coupled to the right and left of the opening 1d of the cutting blade housing 1 so as to extend in the front-rear direction of the cutting blade housing 1 and span between the front and rear frames 2.

As shown in Figs. 5 and 12, a frame 4 that is U-shaped in plan view is inserted into and coupled to the frames 2 so as to be located to the right of the cutting blade housing 1. As shown in Fig. 1, side covers 9 are coupled to right and left portions of the central portion 1a of the cutting blade housing 1.

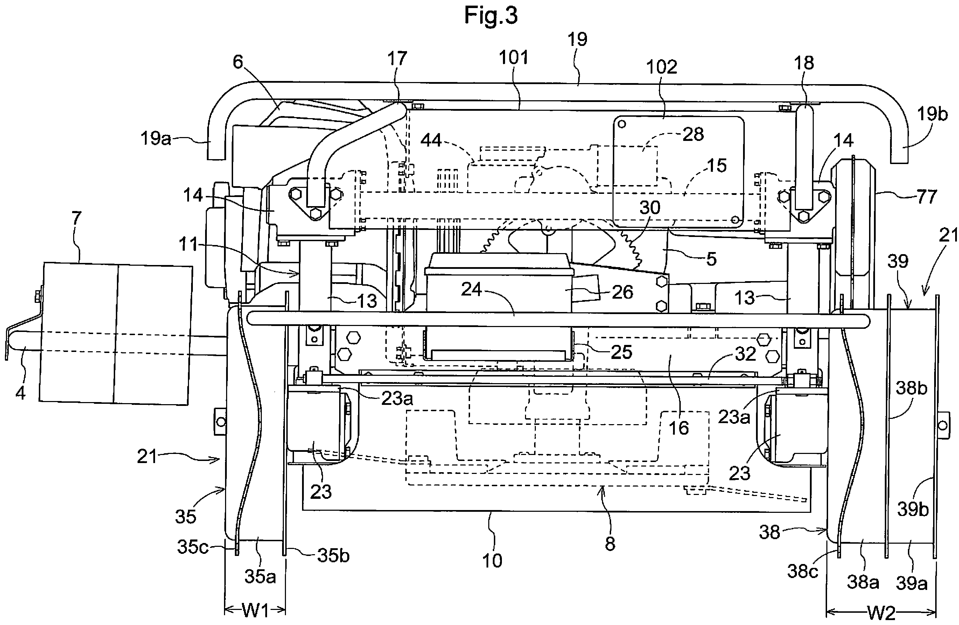

As shown in Figs. 3, 5 and 6, the power transmission case 5 is coupled to the frames 3 and is supported by the cutting blade housing 1, and a cutting blade supporting portion 5a that extends downward from the power transmission case 5 is inserted into the opening 1d of the cutting blade housing 1. The cutting blade 8 is rotatably supported by the cutting blade supporting portion 5a of the power transmission case 5, and the cutting blade 8 is housed in the central portion 1a of the cutting blade housing 1.

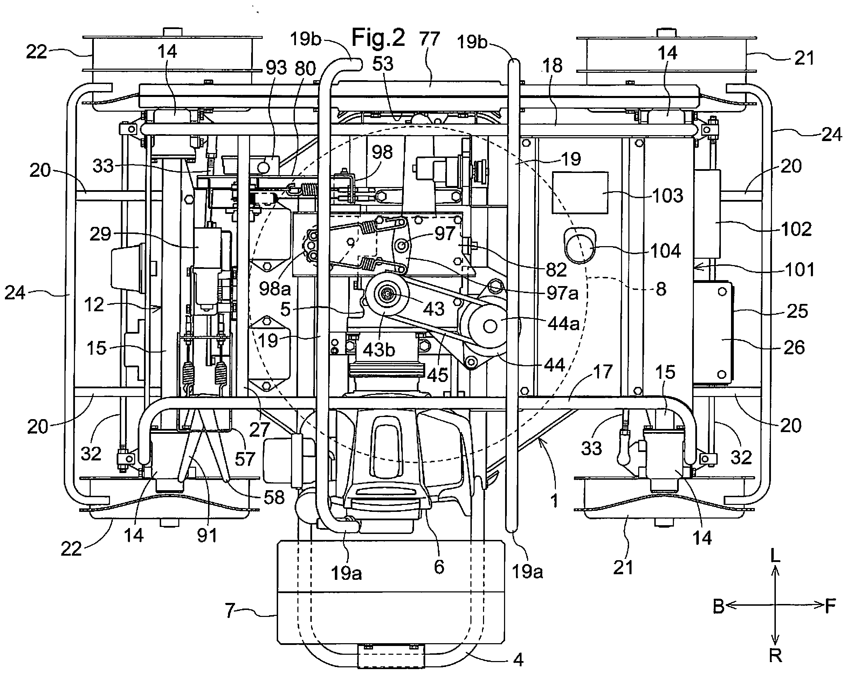

As shown in Figs. 1, 2 and 6, the engine 6 is coupled to the frames 3 and supported by the cutting blade housing 1 so as to be located to the right of the cutting blade housing 1. As shown in Figs. 2, 3 and 12, a balance weight 7 is attached to the frame 4 and is supported by the cutting blade housing 1 so as to be located to the right of the cutting blade housing 1.

### Structures related to First Frame member, Second Frame member, Right Front-Rear Frame, Left Front-Rear Frame and Lateral frame

As shown in Figs. 1, 2, 3 and 12, the first frame member 11 and the second frame member 12 are provided with right and left vertical frames 13 that extend in the up-down direction (vertical direction), and right and left gear cases 14 are coupled to upper portions of the right and left vertical frames 13. Upper horizontal frames 15 that extend in the right-left direction are coupled to the right and left gear cases 14 so as to span therebetween, and lower horizontal frames 16 that extend in the right-left direction are coupled to the right and left vertical frames 13 so as to span between lower portions thereof.

The right and left vertical frames 13 and the upper horizontal frames 15 are round pipe-shaped, and the first frame member 11 and the second frame member 12 are rectangular in a view from the front-rear direction.

As shown in Figs. 5, 9 and 12, the lower horizontal frame 16 of the first frame member 11 is coupled to the one end portion 1b of the cutting blade housing 1 along the entire length thereof in the right-left direction, and the first frame member 11 is coupled to the one end portion 1b of the cutting blade housing 1 so as to extend upward therefrom. The lower horizontal frame 16 of the second frame member 12 is coupled to the other end portion 1c of the cutting blade housing 1 along the entire length thereof in the right-left direction, and the second frame member 12 is coupled to the other end portion 1c of the cutting blade housing 1 so as to extend upward therefrom.

As shown in Figs. 1, 2, 3 and 12, the right front-rear frame 17 (corresponding to a front-rear frame) that extends in the front-rear direction is coupled to the right gear case 14 of the first frame member 11 and the right gear case 14 of the second frame member 12 so as to span therebetween. The left front-rear frame 18 (corresponding to a front-rear frame) that extends in the front-rear direction is coupled to the left gear case 14 of the first frame member 11 and the left gear case 14 of the second frame member 12 so as to span therebetween.

As shown in Figs. 1, 2, 3 and 12, the two lateral frames 19 that extend in the right-left direction are coupled to the right front-rear frame 17 and the left front-rear frame 18 so as to span between the upper surfaces of the right front-rear frame 17 and the left front-rear frame 18, and the lateral frames 19 extend to the right and left from the right front-rear frame 17 and the left front-rear frame 18. A lateral frame 27 that extends in the right-left direction is coupled to the right front-rear frame 17 and the left front-rear frame 18 so as to be located between the second frame member 12 and the lateral frames 19 and span between side surfaces of the right front-rear frame 17 and the left front-rear frame 18.

As shown in Fig. 1 and 3, rubber plate-like covers 10 are coupled to the lower horizontal frames 16 of the first frame member 11 and the second frame member 12 and extend downward, and the covers 10 are respectively located forward of the one end portion 1b of the cutting blade housing 1 and rearward of the other end portion 1c of the cutting blade housing 1.

As shown in Figs. 1, 2, 3, 5 and 12, frames 20 are coupled to the lower horizontal frame 16 of the first frame member 11 and extend forward, and a bumper 24 is coupled to the frames 20. Frames 20 are coupled to the lower horizontal frame 16 of the second frame member 12 and extend rearward, and a bumper 24 is coupled to the frames 20.

As shown in Figs. 1, 2, 3, 5 and 12, a supporting platform 25 is coupled to the lower horizontal frame 16 of the first frame member 11 and extends forward, and a battery 26 is supported by the supporting platform 25. As a result, the battery 26 is surrounded by the lower horizontal frame 16 of the first frame member 11, the frames 20 and the bumper 24 in plan view.

### Arrangement of Power Transmission Case, Engine and Balance Weight

As shown in Fig. 1, the power transmission case 5, the engine 6 and the balance weight 7 are surrounded by the cutting blade housing 1, the right front-rear frame 17, the left front-rear frame 18 and the lateral frames 19 in side view, and are located between the first frame member 11 and the second frame member 12 in side view.

As a result, as shown in Figs. 1 and 3, the power transmission case 5, the engine 6 and the balance weight 7 do not protrude upward of the right front-rear frame 17, the left front-rear frame 18 or the lateral frames 19 in side view and a view in the front-rear direction.

As shown in Figs. 2, 3 and 12, the right front-rear frame 17 is displaced from the right gear cases 14 of the first frame member 11 and the second frame member 12, toward the center of the cutting blade housing 1 in the right-left direction. As a result, as shown in Fig. 2, a gap is secured between the right front-rear frame 17 and the engine 6 in the right-left direction in plan view.

As shown in Fig. 2, the power transmission case 5 and the engine 6 are located between right end portions 19a and left end portions 19b of the lateral frames 19 in plan view, and between the lateral frames 19 in plan view.

As a result, as shown in Fig. 2, the power transmission case 5 and the engine 6 do not protrude to the right of the right end portions 19a of the lateral frames 19 in plan view; and the power transmission case 5 and the engine 6 do not protrude to the left of the left end portions 19b of the lateral frames 19 in plan view, either. The balance weight 7 and the frame 4 protrude to the right from the right end portions 19a of the lateral frames 19 in plan view.

As shown in Fig. 2, the engine 6 is located (supported) between the right first wheel 21 and the right second wheel 22 in plan view, and is located (supported) between the right portions of the lateral frames 19, and the balance weight 7 is located (supported) at a position that is outward and to the right of the engine 6 in plan view.

As shown in Fig. 3, the engine 6 is located (supported) at a low position such that an upper portion of the right first wheel 21, an upper portion of the right second wheel 22 and a lower portion of the engine 6 overlap each other in a view from the front-rear direction.

### Structures for Supporting and Steering First Wheels and Second Wheels

As shown in Figs. 1, 3, 7, 8 and 12, right and left wheel supporting cases 23 are supported by lower portions of the right and left vertical frames 13 of the first frame member 11 so as to be steerable about a vertical axis P1, and right and left wheel supporting cases 23 are supported by lower portions of the right and left vertical frames 13 of the second frame member 12 so as to be steerable about a vertical axis P1.

As shown in Figs. 1, 3, 7 and 8, the right and left first wheels 21 are supported by the right and left wheel supporting cases 23 of the first frame member 11, and the right and left second wheels 22 are supported by the right and left wheel supporting cases 23 of the second frame member 12. Thus, the right and left first wheels 21 are provided on one side of the cutting blade housing 1 in the front-rear direction thereof, and the right and left second wheels 22 are provided on the other side of the cutting blade housing 1 in the front-rear direction thereof.

As shown in Figs. 1, 5, 9 and 10, frames 54 are coupled to one end portion 1b and the other end portion 1c of the cutting blade housing 1 so as to extend upward therefrom. A first steering motor 28 is coupled to an upper portion of the frame 54 of the one end portion 1b of the cutting blade housing 1, and a second steering motor 29 is coupled to an upper portion of the frame 54 of the other end portion 1c of the cutting blade housing 1.

As shown in Figs. 1, 9 and 10, an operation gear 30 that is fan-shaped in a view from the front-rear direction is supported by a frame 54 so as to be pivotable about a horizontal axis P2 extending in the front-rear direction thereof, and a pinion gear 31 that is driven to rotate forward and rearward by the first steering motor 28 (corresponding to a first steering actuator) engages with an operation gear 30 of the one end portion 1b of the cutting blade housing 1. A pinion gear 31 that is driven to rotate forward and rearward by a second steering motor 29 (corresponding to a second steering actuator) engages with an operation gear 30 of the other end portion 1c of the cutting blade housing 1.

As shown in Figs. 1, 2, 3 and 5, a tie rod 32 is connected to the right and left wheel supporting cases 23 of the first frame member 11 so as to span between front arms 23a of the right and left wheel supporting cases 23. As shown in Figs. 1, 5, 9 and 10, a linkage rod 33 is connected to an arm 30a that is coupled to an operation gear 30 and a rear arm 23b of the right wheel supporting case 23 so as to span therebetween.

In this case, as shown in Figs. 1 and 5, the tie rods 32 are located at positions lower than the bumpers 24, the frames 20 and the supporting platform 25 in side view, and are located rearward of the bumpers 24 (on the side of the one end portion 1b of the cutting blade housing 1).

As shown in Figs. 1, 2 and 5, a tie rod 32 is connected to the right and left wheel supporting cases 23 of the second frame member 12 so as to span between rear arms 23a of the right and left wheel supporting cases 23. As shown in Figs. 1, 5, 9 and 10, a linkage rod 33 is connected to an arm 30a that is coupled to an operation gear 30 and a front arm 23b of the left wheel supporting case 23 so as to span therebetween.

In this case, as shown in Figs. 1 and 5, the tie rods 32 are located at positions lower than the bumpers 24 and the frames 20 in side view, and are located forward of the bumpers 24 (on the side of the other end portion 1c of the cutting blade housing 1).

As a result, as shown in Figs. 1 and 5, it is possible to steer the right and left first wheels 21 by pivoting the operation gear 30 about the horizontal axis P2 using the first steering motor 28. It is possible to steer the right and left second wheels 22 by pivoting the operation gear 30 about the horizontal axis P2 using the second steering motor 29.

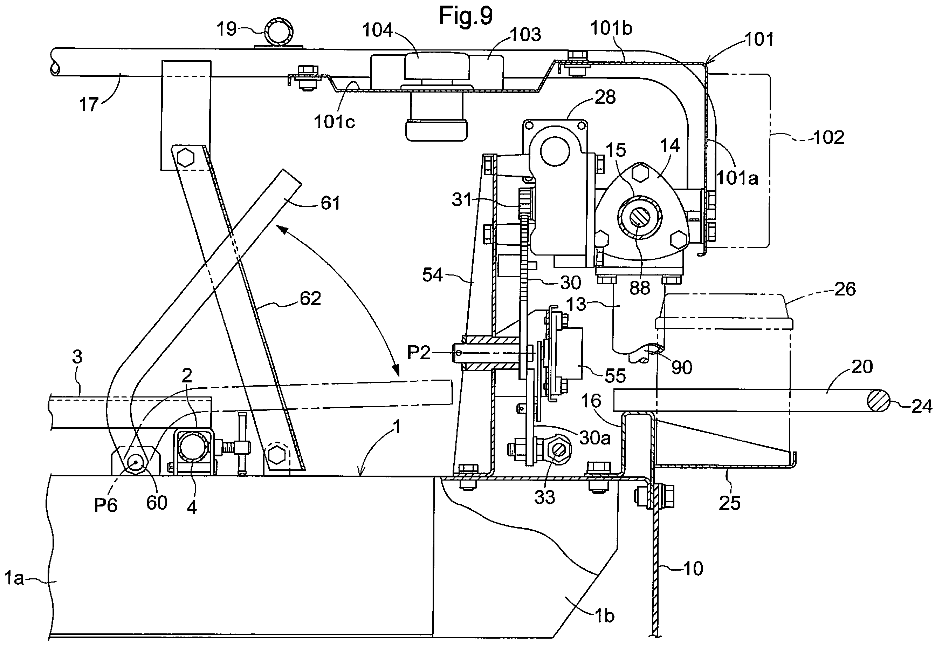

As shown in Figs. 1 and 9, potentiometers 55 and 56 are provided at positions corresponding to the horizontal axes P2. It is possible to detect the steering angle of the right and left first wheels 21 using the potentiometer 55, and it is possible to detect the steering angle of the right and left second wheels 22 using the potentiometer 56.

As shown in Figs. 1 and 9, the first steering motor 28 and the second steering motor 29 are surrounded by the cutting blade housing 1 and the right front-rear frame 17, the left front-rear frame 18 and the lateral frames 19 in side view, and are located between the first frame member 11 and the second frame member 12 in side view.

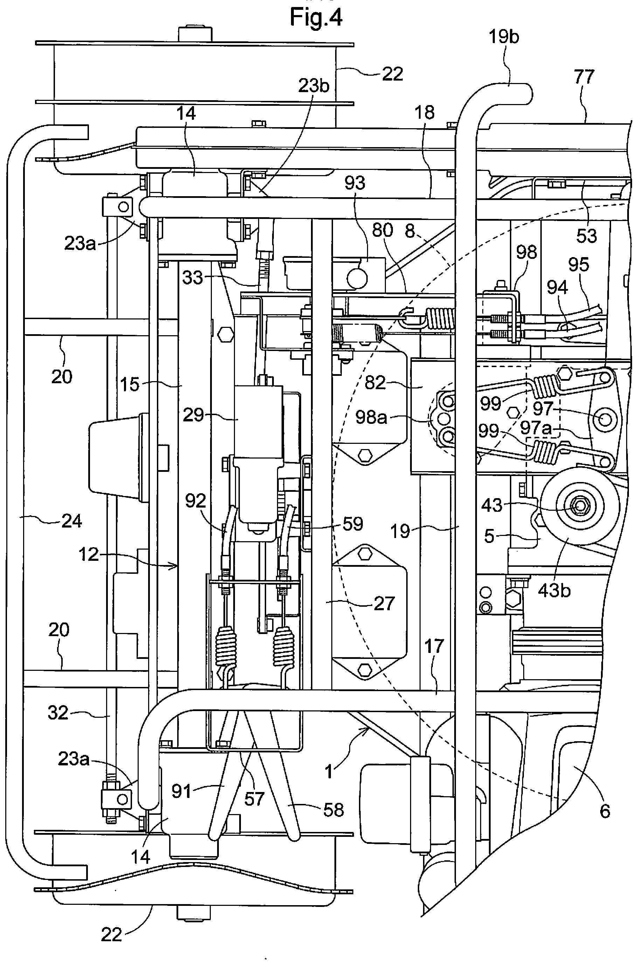

As shown in Figs. 2 and 4, the first steering motor 28 and the second steering motor 29 are located between the right end portion 19a and the left end portion 19b of the lateral frames 19 in plan view, and are located between the right front-rear frame 17 and the left front-rear frame 18.

As shown in Figs. 1 and 2, the first steering motor 28 is located between the upper horizontal frame 15 of the first frame member 11 and a lateral frame 19 in plan view and side view. The second steering motor 29 is located between the upper horizontal frame 15 of the second frame member 12 and the lateral frames 19 and 27 in plan view and side view.

As shown in Fig. 5, the linkage rod 33 of the first wheels 21 is provided to the right of the cutting blade housing 1, the linkage rod 33 of the second wheels 22 is provided to the left of the cutting blade housing 1, and the cutting blade 8 is driven to rotate counterclockwise in plan view shown in Fig. 5.

In this state, in a front portion of the cutting blade housing 1, grass that has been cut and thrown by the cutting blade 8 is thrown to the left of the cutting blade housing 1 along the inner wall of the central portion 1a of the cutting blade housing 1, and in a rear portion of the cutting blade housing 1, the grass is thrown to the right of the cutting blade housing 1 along the inner wall of the central portion 1a of the cutting blade housing 1. As a result, the linkage rod 33 is less likely to be tangled with grass that has been cut and thrown by the cutting blade 8.

### Structures of First Wheels and Second Wheels

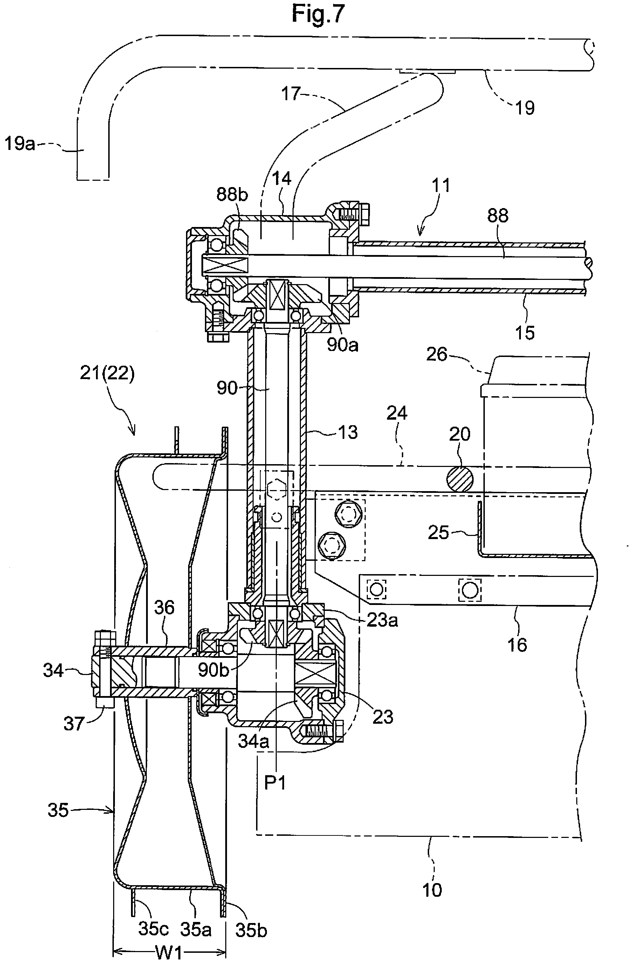

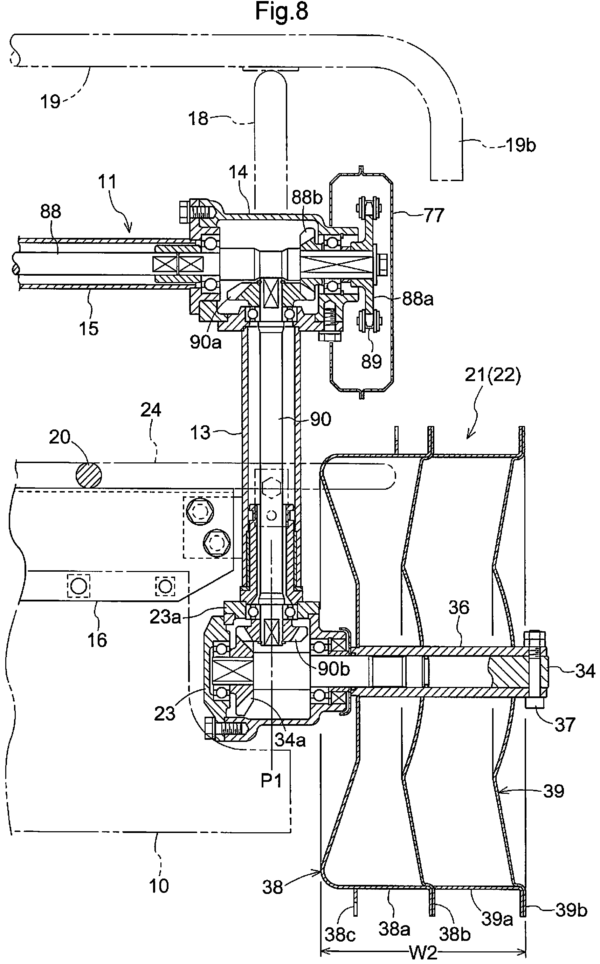

As shown in Figs. 7 and 8, an axle 34 extends to the right from the right wheel supporting case 23, and an axle 34 extends to the left from the left wheel supporting case 23.

As shown in Fig.7, the right first wheel 21 and the right second wheel 22 each include a wheel body 35 formed by punching a plate member into a dish-like shape, and a boss portion 36 that is coupled to a central portion of the wheel body 35 is coupled to an axle 34 using a bolt 37.

As shown in Figs. 3 and 7, in each of the right first wheel 21 and the right second wheel 22, a center-side portion, in the right-left direction of the cutting blade housing 1, of a grounded portion 35a that is the outer circumferential surface of the wheel body 35 is provided with a flat plate-shaped rib 35b that protrudes outward in radial directions, so as to extend in the rotation direction of the right first wheel 21 and the right second wheel 22. A driven portion 35c that is a flat plate-shaped and is provided with a large number of protrusions and recesses on the outer circumferential surface thereof is coupled to the grounded portion 35a of the wheel body 35, so as to extend in the rotation direction of the right first wheel 21 and the right second wheel 22.

As shown in Figs. 3 and 8, the left first wheel 21 and the left second wheel 22 are each provided with two wheel bodies 38 and 39 formed by punching a plate member into a dish-like shape. The boss portion 36 coupled to central portions of the wheel bodies 38 and 39 is coupled to the axle 34 using a bolt 37, and the wheel bodies 38 and 39 are coupled to the axle 34 side by side.

As shown in Figs. 3 and 8, the left first wheel 21 and the left second wheel 22 are provided with flat plate-shaped ribs 38b and 39b that protrude outward in radial directions, at positions on the side opposite to the central side in the right-left direction of the cutting blade housing 1, of grounded portions 38a and 39a that are the outer circumferential surfaces of the wheel bodies 38 and 39, so as to extend in the rotation direction of the left first wheel 21 and the left second wheel 22. A driven portion 38c that is a flat plate-shaped and is provided with a large number of protrusions and recesses on the outer circumferential surface thereof is coupled to the grounded portion 38a of the wheel body 38, so as to extend in the rotation direction of the left first wheel 21 and the left second wheel 22.

If the two wheel bodies 38 and 39 in each of the left first wheel 21 and the left second wheel 22 are regarded as one left first wheel 21 and one left second wheel 22, as shown in Figs. 3 and 8, the rib 39b is provided on the opposite side to the central side, in the right-left direction of the cutting blade housing 1, of the grounded portions 38a and 39a of the left first wheel 21 and the left second wheel 22, and the rib 38b is provided on the central side, in the right-left direction, of the grounded portions 38a and 39a of the left first wheel 21 and the left second wheel 22.

With the above-described structure, as shown in Figs. 3, 7 and 8, a width W2 of the left first wheel 21 and the left second wheel 22 (the grounded portions 38a and 39a of the wheel bodies 38 and 39), which are on the opposite side to the engine 6, is set to be greater than a width W1 of the right first wheel 21 and the right second wheel 22 (the grounded portion 35a of the wheel body 35), which are on the engine 6 side.

As shown in Figs. 3, 7 and 8, upon the first wheels 21 and the second wheels 22 being driven to rotate, driving force from the first wheels 21 and the second wheels 22 is transmitted to the ground via the driven portions 35c and 38c of the first wheels 21 and the second wheels 22. Sideslip of the lawn mower is suppressed by the ribs 35b, 38b and 39b and the driven portions 35c and 38c of the first wheels 21 and the second wheels 22.

### Overview of Transmission System for transiting Power from Engine to Cutting Blade, First wheels and Second Wheels

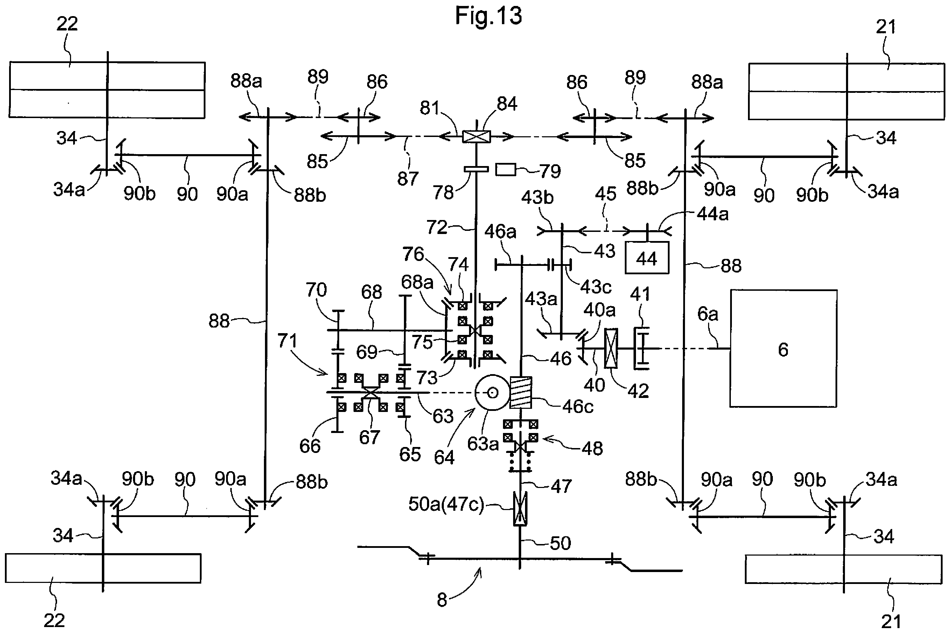

As shown in Fig. 13, power from the engine 6 is transmitted to power transmission shaft 46 via a centrifugal clutch 41, a brake 42 and a power transmission shaft 43, and power from the power transmission shaft 46 is transmitted to the cutting blade 8 via a cutting blade clutch 48.

As shown in Fig. 13, power from the power transmission shaft 46 is transmitted to an output shaft 72 via a worm mechanism 64, a power transmission shaft 63, a transmission device 71 and a forward/rearward switchover device 76, and power from the output shaft 72 is transmitted to the right and left first wheels 21 and the right and left second wheels 22 via power transmission chains 87 and 89 and power transmission shafts 88 and 90.

The following describes the structure for transmitting power from the engine 6 to the cutting blade 8, the structure for transmitting power from the engine 6 to the first wheels 21 and the second wheels 22, and an operation system for each unit.

### Structure for Transmitting Power to Cutting Blade and Structure of Cutting Blade

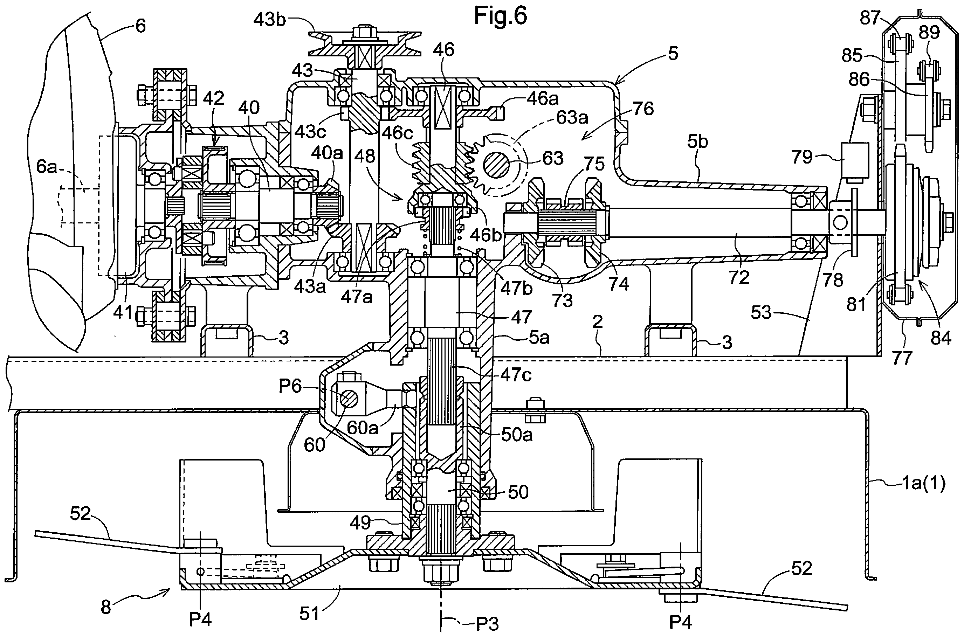

As shown in Figs. 6 and 13, an input shaft 40 is provided in the power transmission case 5 so as to extend in the right-left direction, and the input shaft 40 and an output shaft 6a of the engine 6 are connected to each other via the centrifugal clutch 41 and the brake 42. The power transmission shaft 43 is supported by the power transmission case 5 so as to extend in the up-down direction, and a bevel gear 40a of the input shaft 40 and a bevel gear 43a on a lower portion of the power transmission shaft 43 mesh with each other.

As shown in Figs. 2, 6 and 13, the power transmission shaft 43 protrudes upward from the upper surface of the power transmission case 5, and a pulley 43b is coupled to the protruding portion of the power transmission shaft 43. A power generator 44 (dynamo) is supported by an upper portion of the power transmission case 5, and a power transmission belt 45 is routed around the pulley 43b of the power transmission shaft 43 and an input pulley 44a of the power generator 44.

As shown in Figs. 6 and 13, the power transmission shaft 46 is supported by the power transmission case 5 so as to extend in the up-down direction, and a power transmission gear 43c of the power transmission shaft 43 and a power transmission gear 46a of the power transmission shaft 46 mesh with each other. A power transmission shaft 47 is supported below the power transmission shaft 46 so as to be coaxial with the power transmission shaft 46, and the cutting blade clutch 48 (corresponding to a work clutch) is provided between the power transmission shaft 46 and the power transmission shaft 47.

As shown in Figs. 6 and 13, the cutting blade clutch 48 is provided with a meshing portion 46b that is provided at a lower portion of the power transmission shaft 46, a meshing portion 47a that is supported using a spline structure at an upper portion of the power transmission shaft 47 so as to be able to rotate integrally with the power transmission shaft 47 and slide in the up-down direction, and a spring 47b that biases the meshing portion 47a toward the side on which the meshing portion 47a meshes with the meshing portion 46b (the upper side).

As shown in Figs. 6 and 13, a cylindrical supporting member 49 is supported by the cutting blade supporting portion 5a of the power transmission case 5 so as to be slidable in the up-down direction, and a cutting blade drive shaft 50 is supported by the supporting member 49 so as to be rotatable about a vertical axis P3, and the cutting blade 8 (corresponding to a work apparatus) is coupled to a lower portion of the cutting blade drive shaft 50.

As shown in Figs. 6 and 13, the power transmission shaft 47 and the cutting blade drive shaft 50 are supported so as to be coaxial with each other. A spline portion 47c is included in a lower portion of the power transmission shaft 47, a spline portion 50a is included in an upper portion of the cutting blade drive shaft 50, and the spline portion 47c of the power transmission shaft 47 is inserted into the spline portion 50a of the cutting blade drive shaft 50.

As a result, the power transmission shaft 47, the cutting blade drive shaft 50 and the cutting blade 8 rotate integrally with each other, and it is possible to change the height of the cutting blade 8 by changing the position of the cutting blade drive shaft 50 up and down relative to the power transmission shaft 47.

With the above-described structure, as shown in Figs. 6 and 13, power from the engine 6 is transmitted to the power generator 44 via the centrifugal clutch 41, the input shaft 40, the power transmission shaft 43 and the power transmission belt 45, and thus the power generator 44 is driven. Power from the power transmission shaft 43 is transmitted to the power transmission shaft 46, the cutting blade clutch 48, the power transmission shaft 47 and the cutting blade drive shaft 50, and the cutting blade 8 is driven to rotate about the vertical axis P3.

As shown in Fig. 6, the cutting blade 8 includes a supporting plate 51 that is disc-shaped and is coupled to a lower portion of the cutting blade drive shaft 50, and blade portions 52 that are supported at a plurality of positions on the outer circumferential surface of the supporting plate 51 so as to be rotatable about a vertical axis P4.

### Operation System for Cutting Blade Clutch

As shown in Fig. 6, in the cutting blade clutch 48, the meshing portion 47a of the power transmission shaft 47 is biased toward the side where the meshing portion 47a meshes with the meshing portion 46b of the power transmission shaft 46 (upward) by the spring 47b of the power transmission shaft 47, and the cutting blade clutch 48 is biased by the spring 47b of the power transmission shaft 47 so as to be in a power transmission state.

As shown in Figs. 1, 2, 4 and 11, a box-shaped lever guide 57 that is coupled to the right front-rear frame 17 at a position near the second frame member 12. A cutting blade clutch lever 58 (corresponding to an operation tool) is supported so as to be pivotable about the vertical axis, which extends in the up-down direction, of the lever guide 57, and a wire 59 is connected to the cutting blade clutch lever 58 and an operation tool (not shown) of the cutting blade clutch 48 (the meshing portion 47a of the power transmission shaft 47) so as to span therebetween.

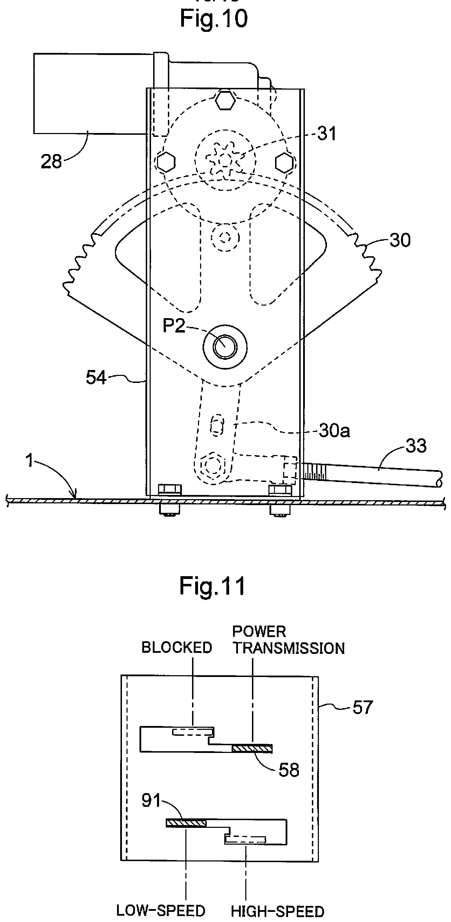

The state shown in Figs. 6 and 11 is a state in which the cutting blade clutch lever 58 has been operated so as to be located at the power transmission position, and a state in which the wire 59 has been operated so as to be drawn toward the meshing portion 47a of the power transmission shaft 47, the meshing portion 47a of the power transmission shaft 47 meshes with the meshing portion 46b of the power transmission shaft 46 due to the spring 47b of the power transmission shaft 47, and the cutting blade clutch 48 has been operated so as to be in the power transmission state.

As shown in Figs. 6 and 11, upon the cutting blade clutch lever 58 being operated so as to be located at a blocked position, the wire 59 is operated so as to be drawn toward the cutting blade clutch lever 58, the meshing portion 47a of the power transmission shaft 47 is moved away from the meshing portion 46b of the power transmission shaft 46, and the cutting blade clutch 48 is operated so to be in a blocked state.

### Change made to Height of Cutting Blade

As shown in Figs. 1, 5, 6 and 9, an operation shaft 60 is supported by the cutting blade supporting portion 5a of the power transmission case 5 so as to be rotatable about a horizontal axis P6 that extends in the right-left direction, and an arm 60a of the operation shaft 60 engages with the supporting member 49.

As shown in Figs. 1, 5 and 9, the operation shaft 60 extends to the right from the cutting blade supporting portion 5a of the power transmission case 5, and a cutting blade height lever 61 (corresponding to a height operation tool) is coupled to the extension portion of the operation shaft 60. A lever guide 62 is coupled to the cutting blade housing 1 and the right front-rear frame 17 so as to span therebetween, and the cutting blade height lever 61 is inserted into the lever guide 62.

As shown in Figs. 1 and 9, the cutting blade height lever 61 and the lever guide 62 are surrounded by the cutting blade housing 1, the right front-rear frame 17, the left front-rear frame 18 and the lateral frames 19 in side view, and are located between the first frame member 11 and the second frame member 12 in side view. As shown in Figs. 5 and 9, the cutting blade height lever 61 and the lever guide 62 is located immediately below the right front-rear frame 17 in plan view.

As shown in Figs. 1, 5, 6 and 9, by operating the cutting blade height lever 61 upward and downward along the lever guide 62, it is possible to change the positions of the supporting member 49 and the cutting blade drive shaft 50 upward and downward relative to the power transmission shaft 47, using the operation shaft 60, and it is possible to change the height of the cutting blade 8. By engaging the cutting blade height lever 61 with the lever guide 62 at a desirable position, it is possible to hold the cutting blade 8 at a desirable height.

### Structure for Transmitting Power from Engine to Forward/rearward switchover device

As shown in Figs. 6 and 13, the power transmission shaft 63 is supported by the power transmission case 5 so as to intersect a position near the power transmission shaft 46 and extend in the front-rear direction, and the worm mechanism 64 is provided so as to span between the power transmission shafts 46 and 63.

As shown in Figs. 6 and 13, in the worm mechanism 64, a worm gear 46c is coupled to the power transmission shaft 46, a warm wheel 63a is coupled to the power transmission shaft 63, and the worm gear 46c of the power transmission shaft 46 and the warm wheel 63a of the power transmission shaft 63 mesh with each other.

As shown in Fig. 13, a power transmission shaft 68 is supported by the power transmission case 5 so as to extend in the front-rear direction, and the transmission device 71 is provided so as to span between the power transmission shafts 63 and 68.

The transmission device 71 is fitted onto the power transmission shaft 63 such that a low-speed gear 65 and a high-speed gear 66 are rotatable relative to the power transmission shaft 63, and a shift member 67 is fitted onto the power transmission shaft 63 using a spline structure so as to be able to rotate integrally with the power transmission shaft 63 and slidable. A low-speed gear 69 and a high-speed gear 70 are coupled to the power transmission shaft 68, the low-speed gears 65 and 69 mesh with each other, and the high-speed gears 66 and 70 mesh with each other.

As shown in Fig. 13, if the shift member 67 is caused to mesh with the low-speed gear 65, power from the power transmission shaft 63 is transmitted to the power transmission shaft 68 via the low-speed gear 69, in a low-speed state. If the shift member 67 is caused to mesh with the high-speed gear 66, power from the power transmission shaft 63 is transmitted to the power transmission shaft 68 via the high-speed gear 70, in a high-speed state.

As shown in Figs. 6 and 13, a travel power transmission portion 5b extends to the left from the power transmission case 5, the output shaft 72 is supported by the travel power transmission portion 5b of the power transmission case 5, and the forward/rearward switchover device 76 is provided so as to span between the power transmission shaft 68 and the output shaft 72.

As shown in Figs. 6 and 13, in the forward/rearward switchover device 76, a forward travel bevel gear 73 and a rearward travel bevel gear 74 are fitted onto the output shaft 72 so as to be rotatable relative to the output shaft 72, and a shift member 75 is fitted onto the output shaft 72 using a spline structure so as to be able to rotate integrally with the output shaft 72 and slidable. A bevel gear 68a is coupled to the power transmission shaft 68, and the bevel gear 68a of the power transmission shaft 68 meshes with the forward travel bevel gear 73 and the rearward travel bevel gear 74.

As shown in Figs. 6 and 13, if the shift member 75 is caused to mesh with the forward travel bevel gear 73, power from the power transmission shaft 68 is transmitted to the output shaft 72 via the forward travel bevel gear 73, in a forward travel state. If the shift member 75 is caused to mesh with the rearward travel bevel gear 74, power from the power transmission shaft 68 is transmitted to the output shaft 72 via the rearward travel bevel gear 74, in a rearward travel state. If the shift member 75 is operated to a neutral position where the shift member 75 does not mesh with the forward travel bevel gear 73 or the rearward travel bevel gear 74, power is blocked at the position of the shift member 75.

### Structure for Transmitting Power from Forward/rearward switchover device to Right and Left First Wheels and Right and Left Second Wheels

As shown in Figs. 5, 6 and 12, a supporting frame 53 is coupled to right portions of the frames 2. As shown in Figs. 2, 6 and 12, a travel power transmission case 77 is coupled to the left gear case 14 of the first frame member 11, the left gear case 14 of the second frame member 12, and the supporting frame 53 so as to span them.

As shown in Figs. 6 and 13, the output shaft 72 is inserted into the travel power transmission case 77, and in the travel power transmission case 77, a sprocket 81 is attached to the output shaft 72 with a torque limiter 84 being interposed therebetween. As a result, if a large load greater than a predetermined load is applied to the right and left first wheels 21 and the right and left second wheels 22, the torque limiter 84 slides and such a large load is not applied to the output shaft 72.

As shown in Figs. 6 and 13, in the travel power transmission case 77, sprockets 85 and 86 are supported so as to rotate integrally with each other, and the power transmission chain 87 is routed around the sprockets 81 and 85.

As shown in Figs. 7, 8 and 13, the power transmission shafts 88 are supported on the inner side relative to the gear cases 14 of the first frame member 11 and the second frame member 12 and the upper horizontal frames 15, and in the travel power transmission case 77, the power transmission chains 89 are each routed around a sprocket 88a that is coupled to a power transmission shaft 88 and a sprocket 86.

As shown in Figs. 7, 8 and 13, the power transmission shafts 90 are supported on the inner side relative to the right and left vertical frames 13 of the first frame member 11 and the second frame member 12. In the right and left gear cases 14 of the first frame member 11 and the second frame member 12, bevel gears 88b that are coupled to the power transmission shafts 88 and bevel gears 90a that are coupled to upper portions of the power transmission shafts 90 mesh each other. In the right and left wheel supporting cases 23 of the first frame member 11 and the second frame member 12, bevel gears 90b that are coupled to lower portions of the power transmission shafts 90 and bevel gears 34a that are coupled to the axles 34 mesh each other.

With the above-described structure, as shown in Figs. 7, 8 and 13, power from the output shaft 72 is transmitted to the axles 34 via the torque limiter 84, the power transmission chains 87 and 89 and the power transmission shafts 88 and 90, and the right and left first wheels 21 and the right and left second wheels 22 are driven to rotate.

As shown in Figs. 6 and 13, a detection gear 78 that detects the travel speed of the lawn mower is coupled to the output shaft 72 between the travel power transmission portion 5b of the power transmission case 5 and the travel power transmission case 77. A speed sensor 79 that detects the travel speed of the lawn mower based on the number of revolutions of the detection gear 78 is supported by the supporting frame 53.

As shown in Figs. 1 and 2, the travel power transmission case 77 is provided to the left of the power transmission case 5 so as to extend along the front-rear direction of the cutting blade housing 1. The travel power transmission case 77 is surrounded by the cutting blade housing 1, the right front-rear frame 17, the left front-rear frame 18 and the lateral frames 19 in side view, and is located on the central side relative to the left end portions 19b of the lateral frames 19, in the right-left direction of the cutting blade housing 1 in plan view.

### Operation System for Accelerator and Brake of Engine

As shown in Figs. 2, 4 and 14, a supporting bracket 80 is coupled to a lateral frame 19 and 27 so as to span therebetween, and an accelerator motor 93 (corresponding to an accelerator actuator) is supported by the supporting bracket 80. A wire 94 is connected to the accelerator motor 93 and an accelerator 6b of the engine 6 so as to span therebetween, and a wire 95 is connected to the accelerator motor 93 and the brake 42 so as to span between them.

As shown in Figs. 2, 4 and 14, the accelerator 6b of the engine 6 is biased toward the low-speed side (the idling side) by a spring (not shown), and upon the wire 94 being operated so as to be drawn toward the accelerator motor 93 side by the accelerator motor 93, the accelerator 6b of the engine 6 is operated so as to be moved toward the high-speed side. The brake 42 has been operated so as to be moved to the braking side by a spring (not shown), and upon the wire 95 being operated by the accelerator motor 93 so as to be drawn toward the accelerator motor 93, the brake 42 is operated so to be in a released state.

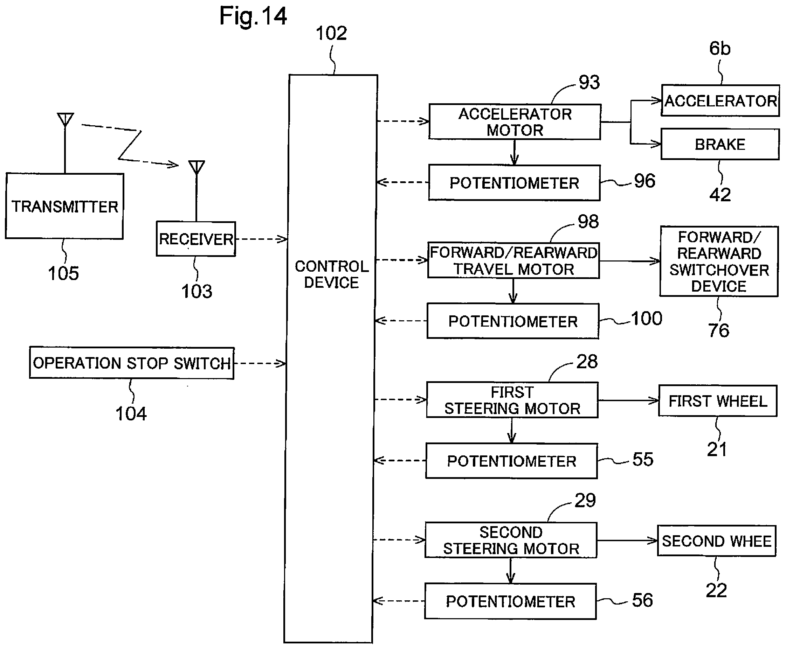

As shown in Figs. 13 and 14, if the wires 94 and 95 have been operated so as to be moved to the engine 6's accelerator 6b and brake 42 side by the accelerator motor 93, the engine 6 is in an idling state, the centrifugal clutch 41 is in a blocked state, and the brake 42 is in a braking state. Thus, the cutting blade 8, the right and left first wheels 21, and the right and left second wheels 22 have brakes applied thereto.

As shown in Figs. 13 and 14, upon the wires 94 and 95 being operated so as to be drawn toward the accelerator motor 93 side by the accelerator motor 93, the brake 42 is operated so as to be in a released state, and the number of revolutions of the engine 6 increases from that in the idling state, and accordingly the centrifugal clutch 41 enters the power transmission state.

Thus, power from the engine 6 is transmitted to the cutting blade 8, the right and left first wheels 21, and the right and left second wheels 22.

As shown in Fig. 14, a potentiometer 96 that detects the actuated position of the accelerator motor 93 is provided, and it is possible to detect the accelerator position of the accelerator 6b of the engine 6 using the potentiometer 96.

As shown in Figs. 2 and 4, the accelerator motor 93 is surrounded by the cutting blade housing 1, the right front-rear frame 17, the left front-rear frame 18 and the lateral frame 19 in side view, and is located between the first frame member 11 and the second frame member 12 in side view. The accelerator motor 93 is located between the right end portions 19a and the left end portions 19b of the lateral frames 19 in plan view, and is located immediately below the lateral frame 27 in plan view.

### Operation System for Forward/Rearward Switchover Device

As shown in Figs. 2, 4 and 5, a supporting plate 82 is coupled to the upper surface of the power transmission case 5. An operation shaft 97 that operates the shift member 75 (see Fig. 13) (corresponding to a forward/rearward travel actuator) extends upward from the power transmission case 5 and the supporting plate 82, and an arm 97a is coupled to the extension portion of the operation shaft 97. A forward/rearward travel motor 98 is supported by the supporting plate 82, and a pair of springs 99 are connected to an arm 98a that is to be operated by the forward/rearward travel motor 98, and to the arm 97a of the operation shaft 97 so as to span therebetween.

As shown in Figs. 2, 4 and 5, the forward/rearward travel motor 98 is actuated and thus the arm 98a of the forward/rearward travel motor 98 is operated to rotate in a forward direction and a reverse direction, and the operation shaft 97 is operated to rotate in a forward direction and a reverse direction due to the action of the springs 99. As a result, as shown in Fig. 13, the shift member 75 is operated by the operation shaft 97 so as to be located at a forward position where the shift member 75 meshes with the forward travel bevel gear 73, a rearward position where the shift member 75 meshes with the rearward travel bevel gear 74, and a neutral position where the shift member 75 does not mesh with the forward travel bevel gear 73 or the rearward travel bevel gear 74.

As shown in Fig. 14, a potentiometer 100 that detects the actuated position of the forward/rearward travel motor 98 is provided, and it is possible to detect the operation position (the forward position, the rearward position, or the neutral position) of forward/rearward switchover device 76 using the potentiometer 100.

As shown in Figs. 2, 4 and 5, the forward/rearward travel motor 98 is surrounded by the cutting blade housing 1, the right front-rear frame 17, the left front-rear frame 18 and the lateral frame 19 in side view, and is located between the first frame member 11 and the second frame member 12 in side view. The forward/rearward travel motor 98 is located between the right end portions 19a and the left end portions 19b of the lateral frames 19 in plan view, and is located immediately below the lateral frame 19 in plan view.

### Operation System for Transmission Device, and Arrangement of Transmission Lever and Cutting Blade Clutch Lever

As shown in Figs. 1, 2, 4 and 11, a transmission lever 91 (corresponding to an operation tool) is supported so as to be pivotable about a horizontal axis of the lever guide 57 extending in the front-rear direction. An operation tool (not shown) of the transmission device 71, which operates the shift member 67 (see Fig. 13) is provided, the operation tool of the transmission device 71 is biased toward the low-speed state by a spring (not shown), and a wire 92 is connected to the transmission lever 91 and the operation tool of the transmission device 71 so as to span therebetween.

The state shown in Figs. 1, 2, 4 and 11 is a state in which the transmission lever 91 has been operated so as to be located at the low-speed position, and a low-speed state of the transmission device 71 in which the wire 92 has been operated so as to be drawn toward the shift member 67 of the transmission device 71, and the shift member 67 meshes with the low-speed gear 65 due to the action of a spring.

Upon the transmission lever 91 being operated to be located at the high-speed position, the wire 92 is operated so as to be drawn toward the transmission lever 91, the shift member 67 meshes with the high-speed gear 66, and the transmission device 71 enters in a high-speed state.

As shown in Figs. 1, 2 and 4, the cutting blade clutch lever 58 and the transmission lever 91 are supported by the lever guide 57, and the lever guide 57 is coupled to the right front-rear frame 17 at a portion in the vicinity of the second frame member 12.

As a result, as shown in Figs. 1, 2 and 4, the cutting blade clutch lever 58 and the transmission lever 91 are supported by a portion adjacent to the engine 6 in the right-left direction of the cutting blade housing 1 by the first frame member 11, the second frame member 12 and the right front-rear frame 17.

The cutting blade clutch lever 58 and the transmission lever 91 are located between the right end portions 19a and the left end portions 19b of the lateral frames 19 so as not to protrude outward to the right from the right end portions 19a of the lateral frames 19 in plan view, and is located between the second frame member 12 and the lateral frames 19 in plan view.

### Wireless Operation of Lawn mower

This lawn mower is a remote control type lawn mower that is wirelessly operated. As shown in Figs. 1, 2, 3, 9 and 12, a supporting plate 101 that is formed by coupling two plate members to each other is coupled to the first frame member 11, the right front-rear frame 17 and the left front-rear frame 18 so as to span them, and a control device 102 is coupled to a front portion 101a of the supporting plate 101.

As shown in Figs. 1, 2, 3, 9 and 12, an upper portion 101b of the supporting plate 101 is bent, and a recessed portion 101c that spans between the right front-rear frame 17 and the left front-rear frame 18 is provided in the upper portion 101b of the supporting plate 101. A receiver 103 and an operation stop switch 104 that is operated by an operator are coupled to the recessed portion 101c of the supporting plate 101.

As shown in Fig. 14, the control device 102 operates the first steering motor 28, the second steering motor 29, the accelerator motor 93 and the forward/rearward travel motor 98, and detection signals from the potentiometers 55, 56, 96 and 100 and operation signals from the receiver 103 and the operation stop switch 104 are input to the control device 102.

As shown in Fig. 14, operation signals from a transmitter 105 that is operated by an operator is received by the receiver 103, and the control device 102 operates the first steering motor 28, the second steering motor 29, the accelerator motor 93 and the forward/rearward travel motor 98 based on operation signals from the transmitter 105 (the receiver 103).

When steering the first wheels 21 and the second wheels 22, using the first steering motor 28 and the second steering motor 29, it is possible to select one of a first steering mode, a second steering mode, an in-phase mode and an anti-phase mode, which are described in (1) to (4) below, using the transmitter 105.
(1) A first steering mode in which the first wheels 21 are steered by the first steering motor 28 with the second wheels 22 being fixed at straight travel positions.
(2) A second steering mode in which the second wheels 22 are steered by the second steering motor 29 with the first wheels 21 being fixed at straight travel positions.
(3) An in-phase mode in which the first wheels 21 and the second wheels 22 are steered in the same direction by the first steering motor 28 and the second steering motor 29, so that the lawn mower travels in parallel.
(4) An anti-phase mode in which the first wheels 21 and the second wheels 22 are steered in opposite directions by the first steering motor 28 and the second steering motor 29, so that the lawn mower makes a small turn.

When a lawn mower performs mowing work on an inclined surface, the lawn mower may repeatedly perform work such that first the lawn mower performs mowing work while travelling along a contour line of the inclined surface from one end to the other end of the inclined surface, and upon the lawn mower reaching the other end of the inclined surface, the lawn mower is moved slightly downward or upward along the inclined surface, and thereafter the lawn mower performs mowing work while travelling along a contour line of the inclined surface from the other end to the one end of the inclined surface.

During the above-described mowing work, the lawn mower according to the present invention travels along a contour line such that the right first wheel 21 and the right second wheel 22 on the engine 6 side are located on the hill side (the upper side of the inclined surface) and the left first wheel 21 and the left second wheel 22 on the side opposite to the engine 6 are located on the valley side (the lower side of the inclined surface).

When the lawn mower reaches one (or the other) end of an inclined surface, a steering operation is performed on the lawn mower in one of the first steering mode, the second steering mode, the in-phase mode and the anti-phase mode, which are described above in (1) to (4), and a forward/rearward travel operation is performed on the lawn mower, so that the lawn mower travels slightly downward or upward along the inclined surface.

### Other Embodiments

The following describes other embodiments only regarding differences from the above-described embodiment.
(1). The engine 6 may be located (supported) between the left first wheel 21 and the left second wheel 22 in plan view, the balance weight 7 may be located (supported) at a position that is outward and to the left of the engine 6, and the engine 6 may be located (supported) at a low position such that an upper portion of the left first wheel 21, an upper portion of the left second wheel 22 and a lower portion of the engine 6 overlap each other in a view from the front-rear direction.
   In the case of the above-described structure, the travel power transmission case 77 is to be provided to the right of the power transmission case 5. The right first wheel 21 and the right second wheel 22 are to include the wheel bodies 38 and 39, and the left first wheel 21 and the left second wheel 22 are to include the wheel bodies 35. The cutting blade clutch lever 58, the transmission lever 91 and the lever guide 57 are to be provided on the left front-rear frame 18 that is a portion adjacent to the engine 6 in the right-left direction of the cutting blade housing 1.
(2). Each of the first wheel 21 and the second wheel 22 on the opposite side to the engine 6 need not include two wheel bodies 38 and 39, and may include one wheel body (not shown) and the width W2 may be larger.
(3). The rib 38b provided on the central side, in the right-left direction, of the grounded portions 38a and 39a of the first wheel 21 and the second wheel 22 on the opposite side to the engine 6 may be omitted.
   On the grounded portions 35a, 38a and 39a of the first wheels 21 and the second wheels 22, both a portion on the central side in the right-left direction of the cutting blade housing 1 and a portion that is on the opposite side to the center in the right-left direction of the cutting blade housing 1 may be provided with a rib.
(4). In a case where the cutting blade clutch lever 58, the transmission lever 91 and the lever guide 57 are provided on a portion adjacent to the engine 6 in the right-left direction of the cutting blade housing 1, the cutting blade clutch lever 58, the transmission lever 91 and the lever guide 57 may be located between the first frame member 11 and the lateral frames 19 in plan view.

The operation stop switch 104 may be provided in the same manner as the cutting blade clutch lever 58, the transmission lever 91 and the lever guide 57 as an operation tool that is manually operated other than the cutting blade clutch lever 58, the transmission lever 91 and the lever guide 57.

The cutting blade clutch lever 58, the transmission lever 91, the lever guide 57 and the operation stop switch 104 need not be provided on the right front-rear frame 17 or the left front-rear frame 18, and may be provided at lower positions of the cutting blade housing 1, and thus may be provided on a portion adjacent to the engine 6 in the right-left direction of the cutting blade housing 1.

(5). In Figs. 1, 2 and 3, the lateral frames 19 are coupled to the upper surfaces of the right front-rear frame 17 and the left front-rear frame 18, and therefore, an upper end portion of the power transmission case 5 and an upper end portion of the engine 6 protrude upward from the right front-rear frame 17 and the left front-rear frame 18 in side view and a view in the front-rear direction. However, the lateral frames 19 may be provided such that the upper end portions do not protrude upward from the lateral frames 19.

In Figs. 1, 2 and 3, the lateral frames 19 may be coupled to the lower surfaces of the right front-rear frame 17 and the left front-rear frame 18. In this structure, an upper end portion of the power transmission case 5 and an upper end portion of the engine 6 protrude upward from the lateral frames 19 in side view and a view from the front-rear direction. However, it suffices if they do not protrude upward from the right front-rear frame 17 and the left front-rear frame 18.

Instead of one right front-rear frame 17 and one left front-rear frame 18, a plurality of right front-rear frames 17 may be provided, and a plurality of left front-rear frames 18 may be provided. If this is the case, at least one of the right front-rear frame 17 and the left front-rear frame 18 may be located at the center in the right-left direction of the cutting blade housing 1 in plan view.

Instead of two lateral frames 19, three or more lateral frames 19 may be provided. If three or more lateral frames 19 are provided, at least one lateral frame 19 may be provided immediately above the power transmission case 5 and the engine 6.
(6). The cutting blade height lever 61 and the lever guide 62 may be provided immediately below the left front-rear frame 18 in plan view, and may be provided between the right front-rear frame 17 and the left front-rear frame 18 in plan view.
(7). The present invention is not only applicable to a remote control type work vehicle that is wirelessly operated, but also to an autonomous travel type work vehicle that detects obstacles such as trees, using a radar sensor or the like, and travels automatically while avoiding obstacles, and a walk-behind type work vehicle with an elongated steering rod extending from the vehicle body thereof, which is variously operated by an operator holding the steering rod.
(8). The present invention is not only applicable to a lawn mower, but also to a work vehicle that is provided with a cultivator apparatus (corresponding to a work apparatus) for cultivating the ground, and a work vehicle that is provided with a sprayer apparatus (corresponding to a work apparatus) for spraying chemicals or water.

### Description of Reference Numerals/Marks

- 1:: Cutting Blade Housing (Vehicle body, Work Housing)
- 1b:: One End Portion of Cutting Blade Housing (Work Housing)
- 1c:: The Other End Portion of Cutting Blade Housing (Work Housing)
- 5:: Power Transmission Case
- 6:: Engine
- 6b:: Accelerator of Engine
- 7:: Balance Weight
- 8:: Cutting Blade (Work Apparatus)
- 11:: First Frame Member
- 12:: Second Frame Member
- 13:: Vertical Frame
- 15:: Upper Horizontal Frame
- 16:: Lower Horizontal Frame
- 17:: Right Front-rear Frame (Front-rear Frame)
- 18:: Left Front-rear Frame (Front-rear Frame)
- 19:: Lateral frame
- 19a:: Right End Portion of Lateral frame
- 19b:: Left End Portion of Lateral frame
- 21:: First Wheel
- 22:: Second Wheel
- 28:: First Steering Actuator
- 29:: Second Steering Actuator
- 35a:: Grounded Portion of Engine-side First Wheel
- 35a:: Grounded Portion of Engine-side Second Wheel
- 35b:: Rib
- 38a:: Grounded Portion of First Wheel on Opposite Side to Engine
- 38a:: Grounded Portion of Second Wheel on Opposite Side to Engine
- 39a:: Grounded Portion of First Wheel on Opposite Side to Engine
- 39a:: Grounded Portion of Second Wheel on Opposite Side to Engine
- 39b:: Rib
- 48:: Cutting Blade Clutch (Work Clutch)
- 58:: Cutting Blade Clutch Lever (Clutch Operation tool, Operation tool)
- 61:: Cutting Blade Height Lever (Height Operation tool)
- 71:: Transmission Device
- 76:: Forward/rearward switchover device
- 77:: Travel Power Transmission Case
- 91:: Transmission Lever (Transmission Operation tool, Operation tool)
- 93:: Accelerator Motor (Accelerator Actuator)
- 98:: Forward/Rearward Travel Motor (Forward/Rearward Travel Actuator)
- W1:: Width of Engine-Side First Wheel
- W1:: Width of Engine-Side Second Wheel
- W2:: Width of First Wheel on Opposite Side to Engine
- W2:: Width of Second Wheel on Opposite Side to Engine

## Claims

1. A work vehicle comprising:
right and left first wheels (21) that are provided on one side of a vehicle body in a front-rear direction thereof;
right and left second wheels (22) that are provided on the other side of the vehicle body in the front-rear direction thereof;
a work apparatus (8) that is provided for the vehicle body; and
an engine (6) that transmits power to the right and left first wheels, the right and left second wheels and the work apparatus,
wherein,
in plan view of the vehicle body, the engine is supported by the vehicle body between the right first wheel and the right second wheel or between the left first wheel and the left second wheel,
**characterized in that**
in the right-left direction of the vehicle body, the width of the first wheel (21) on the opposite side to the engine is set to be greater than the width of the first wheel (21) on the engine side, and
in the right-left direction of the vehicle body, the width of the second wheel (22) on the opposite side to the engine is set to be greater than the width of the second wheel on the engine side (22).

2. The work vehicle according to claim 1,
wherein the engine (6) is supported by the vehicle body such that the engine overlaps the first wheel (21) and the second wheel (22) on the engine side in a view from the front-rear direction of the vehicle body.

3. The work vehicle according to claim 1 or 2,
wherein a balance weight (7) is supported at a position that is outward of the engine (6) in the right-left direction of the vehicle body.

4. The work vehicle according to any one of claims 1 to 3,
wherein a center-side portion, in the right-left direction of the vehicle body, of a grounded portion (35a) of each of the first wheel (21) and the second wheel (22) on the engine side is provided with a flat plate-shaped rib (35b) that protrudes outward in radial directions, so as to extend in a rotation direction of the wheel, and
a lateral outer side portion, relative to the vehicle body, of a grounded portion (38a, 39a) of each of the first wheel and the second wheel on the opposite side to the engine is provided with a flat plate-shaped rib (39b) that protrudes outward in radial directions, so as to extend in a rotation direction of the wheel.

5. The work vehicle according to any one of claims 1 to 4, further comprising:
an operation tool (91) that is to be manually operated and is located on the engine side in the right-left direction of the vehicle body.

## Patentansprüche

1. Arbeitsfahrzeug, umfassend:
ein erstes rechtes und linkes Rad (21), die auf einer Seite eines Fahrzeugaufbaus in einer Vorne-Hinten-Richtung davon vorgesehen sind,
ein zweites rechtes und linkes Rad (22), die auf der anderen Seite des Fahrzeugaufbaus in der Vorne-Hinten-Richtung davon vorgesehen sind,
eine Arbeitsvorrichtung (8), die für den Fahrzeugaufbau vorgesehen ist, und
einen Motor (6), der Leistung auf das erste rechte und linke Rad, das zweite rechte und linke Rad und die Arbeitsvorrichtung überträgt,
wobei
in einer Draufsicht des Fahrzeugaufbaus der Motor durch den Fahrzeugaufbau zwischen dem ersten rechten Rad und dem zweiten rechten Rad oder zwischen dem ersten linken Rad und dem zweiten linken Rad getragen wird,
**dadurch gekennzeichnet, dass**
in der Recht-Links-Richtung des Fahrzeugaufbaus, die Breite des ersten Rads (21) auf der dem Motor gegenüberliegenden Seite so eingestellt ist, dass sie größer als die Breite des ersten Rads (21) auf der Motorseite ist, und
in der Recht-Links-Richtung des Fahrzeugaufbaus, die Breite des zweiten Rads (22) auf der dem Motor gegenüberliegenden Seite so eingestellt ist, dass sie größer als die Breite des zweiten Rads auf der Motorseite (22) ist.

2. Arbeitsfahrzeug nach Anspruch 1,
wobei der Motor (6) durch den Fahrzeugaufbau so getragen wird, dass der Motor das erste Rad (21) und das zweite Rad (22) auf der Motorseite in einer Ansicht von der Vorne-Hinten-Richtung des Fahrzeugaufbaus überlappt.

3. Arbeitsfahrzeug nach Anspruch 1 oder 2,
wobei ein Ausgleichsgewicht (7) an einer Position getragen wird, die außen von dem Motor (6) in der Rechts-Links-Richtung des Fahrzeugaufbaus liegt.

4. Arbeitsfahrzeug nach einem der Ansprüche 1 bis 3,
wobei eine Mittelseitensektion, in der Rechts-Links-Richtung des Fahrzeugaufbaus, einer geerdeten Sektion (35a) von jedem von dem ersten Rad (21) und dem zweiten Rad (22) auf der Motorseite mit einer flachplattenförmigen Rippe (35b) versehen ist, die nach außen in radialen Richtungen vorsteht, um sich in einer Drehrichtung des Rads zu erstrecken, und
eine laterale Außenseitensektion, relativ zu dem Fahrzeugaufbau, einer geerdeten Sektion (38a, 39a) von jedem von dem ersten Rad und dem zweiten Rad auf der dem Motor gegenüberliegenden Seite mit einer flachplattenförmigen Rippe (39b) versehen ist, die nach außen in radialen Richtungen vorsteht, um sich in einer Drehrichtung des Rads zu erstrecken.

5. Arbeitsfahrzeug nach einem der Ansprüche 1 bis 4, ferner umfassend:
ein Betriebswerkzeug (91), das manuell betrieben werden soll und sich auf der Motorseite in der Rechts-Links-Richtung des Fahrzeugaufbaus befindet.

## Revendications

1. Véhicule de travail comprenant :
des premières roues droite et gauche (21) qui sont prévues sur un côté d'une carrosserie de véhicule dans sa direction avant-arrière ;
des deuxièmes roues droite et gauche (22) qui sont prévues de l'autre côté de la carrosserie de véhicule dans sa direction avant-arrière ;
un appareil de travail (8) qui est prévu pour la carrosserie de véhicule ; et
un moteur (6) qui transmet la puissance aux premières roues droite et gauche, aux deuxièmes roues droite et gauche et à l'appareil de travail,
dans lequel :
sur la vue en plan de la carrosserie de véhicule, le moteur est supporté par la carrosserie de véhicule entre la première roue droite et la deuxième roue droite ou entre la première roue gauche et la deuxième roue gauche,
**caractérisé en ce que** :
dans la direction droite-gauche de la carrosserie de véhicule, la largeur de la première roue (21) du côté opposé au moteur est déterminée pour être supérieure à la largeur de la première roue (21) du côté du moteur, et
dans la direction droite-gauche de la carrosserie de véhicule, la largeur de la deuxième roue (22) du côté opposé au moteur est déterminée pour être supérieure à la largeur de la deuxième roue du côté du moteur (22).

2. Véhicule de travail selon la revendication 1,
dans lequel le moteur (6) est supporté par la carrosserie de véhicule de sorte que le moteur recouvre la première roue (21) et la deuxième roue (22) du côté du moteur sur une vue depuis la direction avant-arrière de la carrosserie de véhicule.

3. Véhicule de travail selon la revendication 1 ou 2,
dans lequel un poids d'équilibrage (7) est supporté dans une position qui est à l'extérieur du moteur (6) dans la direction droite-gauche de la carrosserie de véhicule.

4. Véhicule de travail selon l'une quelconque des revendications 1 à 3,
dans lequel une partie du côté du centre, dans la direction droite-gauche de la carrosserie de véhicule, d'une partie reliée à la terre (35a) de chacune parmi la première roue (21) et la deuxième roue (22) du côté du moteur, est prévue avec une nervure en forme de plaque plate (35b) qui fait saillie vers l'extérieur dans des directions radiales, afin de s'étendre dans une direction de rotation de la roue, et
une partie latérale externe, par rapport à la carrosserie de véhicule, d'une partie reliée à la terre (38a, 39a) de chacune parmi la première roue et la deuxième roue du côté opposé au moteur, est prévue avec une nervure en forme de plaque plate (39b) qui fait saillie vers l'extérieur dans les directions radiales, afin de s'étendre dans une direction de rotation de la roue.

5. Véhicule de travail selon l'une quelconque des revendications 1 à 4, comprenant en outre :
un outil d'actionnement (91) qui doit être actionné manuellement et est positionné du côté du moteur dans la direction droite-gauche de la carrosserie de véhicule.
